(19) Europäisches Patentamt
European Patent Office
Office européen des brevets

(11) EP 3 986 138 B1

(12) EUROPEAN PATENT SPECIFICATION

(45) Date of publication and mention
of the grant of the patent:
**28.01.2026 Bulletin 2026/05**

(21) Application number: **20742530.7**

(22) Date of filing: **23.06.2020**

(51) International Patent Classification (IPC):
*A01N 63/22* (2020.01)    *A01P 21/00* (2006.01)

(52) Cooperative Patent Classification (CPC):
**A01N 63/22**

(86) International application number:
**PCT/US2020/039112**

(87) International publication number:
**WO 2020/263812 (30.12.2020 Gazette 2020/53)**

(54) **A BACILLUS STRAIN AND METHODS OF ITS USE FOR PLANT GROWTH PROMOTION**

EIN BACILLUS-STAMM UND EIN VERFAHREN ZU DESSEN VERWENDUNG ZUR PFLANZENWACHSTUMSFÖRDERUNG

UNE SOUCHE DE BACILLUS ET UN PROCÉDÉ POUR SON UTILISATION DANS LA STIMULATION DE LA CROISSANCE DES PLANTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2019 US 201962865823 P**

(43) Date of publication of application:
**27.04.2022 Bulletin 2022/17**

(73) Proprietors:
• **Auburn University**
  **Auburn, AL 36832 (US)**
• **Bayer CropScience LLC**
  **St. Louis MO 63167 (US)**

(72) Inventors:
• **KLOEPPER, Joseph W.**
  **Auburn, AL 36832 (US)**
• **MCINROY, John A.**
  **Auburn, AL 36832 (US)**
• **ALLY, Dilara**
  **Natick, MA 01760 (US)**
• **BERNHARD, Joshua**
  **Woodland, CA 95695 (US)**
• **FERNANDEZ, Lorena**
  **Woodland, CA 95776 (US)**
• **GUILHABERT, Magalie**
  **Davis, CA 95618 (US)**
• **NANGLE, Kate W.**
  **Raleigh, NC 27612 (US)**
• **THOMAS, Varghese P.**
  **Davis, CA 95616 (US)**
• **MANAVALAN, Lakshmi Praba**
  **Davis, CA 95616 (US)**

(74) Representative: **BIP Patents**
**c/o Bayer Intellectual Property GmbH**
**Alfred-Nobel-Straße 50**
**40789 Monheim am Rhein (DE)**

(56) References cited:
**WO-A1-2013/090884       US-A1- 2010 179 060**
**US-A1- 2019 071 336**

Remarks:
The complete document including Reference Table(s) and the Sequence Listing(s) can be downloaded from the EPO website

**Description**

**TECHNICAL FIELD**

The present invention relates to the field of bacterial strains and their ability to enhance plant health, including yield.

**BACKGROUND**

In crop protection, there is a continuous need for applications that improve the health of plants. Healthier plants generally result in higher yields and/or better quality of a plant or its products. In addition, due to their increased vigor, healthier plants show a better resistance to biotic and/or abiotic stress.

In order to promote plant health, fertilizers are employed worldwide, based on both inorganic and organic substances. A fertilizer may be a single substance or a composition, and is used to provide nutrients to plants. A major breakthrough in the application of fertilizers was the development of nitrogen-based fertilizer by Justus von Liebig around 1840. Fertilizers, however, can lead to soil acidification and destabilization of nutrient balance in soil, including depletion of minerals and enrichment of salt and heavy metals. In addition, excessive fertilizer use can lead to alteration of soil fauna as well as contaminate surface water and ground water. Further, unhealthful substances such as nitrate may become enriched in plants and fruits.

A possible alternative to fertilizer for advancing plant growth is plant-associated bacteria such as rhizobacteria. Such bacteria are associated with many, if not all, plant species. The mechanism behind the effect of plant-associated bacteria on plant growth is still open to speculation. Ryu, et al., (Proc. Natl. Acad. Sci. U.S.A. [2003] 100, 4927-4932) have suggested that among rhizobacteria, which colonize roots, some strains regulate plant growth via releasing 2, 3-butanediol and/or acetoin. US 2010/179060 discloses a plant growth stimulating Bacillus velezensis.

There remains a need to provide alternative means of advancing the growth of a plant and improving its health. This includes a need for highly effective plant growth-promoting rhizobacteria and related fermentation products.

**SUMMARY**

To meet this need, Applicants developed a plant growth-promoting rhizobacteria with outstanding plant growth promotion capabilities: *Bacillus* spp. NRRL B-67746. The present invention is directed to compositions comprising *Bacillus* spp. NRRL B-67746. The invention also encompasses mutants of such strain having all the identifying characteristics of the parent strain. Such compositions are biologically pure cultures of the parent or mutant strain. In some instances, such mutants have improved ability to promote plant growth compared to *Bacillus* spp. strain NRRL B-67746.

The mutant strains have sequence identity of greater than about 98% sequence identity to the 16S rRNA sequence of B-67746.

In some instances, the compositions are fermentation products of *Bacillus* spp. strain NRRL B-67746 or mutants thereof. In other aspects, the fermentation product is a freeze-dried powder or a spray-dried powder.

In certain aspects, the fermentation product further comprises a formulation ingredient. The formulation ingredient may be a wetting agent, extender, solvent, spontaneity promoter, emulsifier, dispersant, frost protectant, osmoprotectant, thickener, nutrient starter for spores, and/or an adjuvant. In one embodiment, the formulation ingredient is a thickener. In yet another aspect the fermentation product is a flowable suspension.

The present invention also provides a method of treating a plant to improve plant growth, including by increasing plant yield, by applying to the plant, to a part of the plant and/or to a locus of the plant *Bacillus* spp. strain B-67746 or a mutant thereof or a composition comprising *Bacillus* spp. strain B-67746 or a mutant thereof. The composition may be a fermentation product of the *Bacillus* spp. strain B-67746 or a mutant thereof. In yet another aspect of this embodiment, the composition also comprises an agriculturally acceptable carrier, such as a formulation ingredient.

In other embodiments, the method comprises applying the composition to seed of a plant.

In other aspects, the useful plants are selected from the group consisting of soybean, corn, sorghum, cotton, wheat, canola (oilseed rape) and sugarbeet.

In yet another aspect, the composition comprises a seed of a useful plant coated with *Bacillus* spp. strain B-67746 or a mutant thereof. In one embodiment, the strain is applied at about $1 \times 10^5$ to about $1 \times 10^{10}$ colony forming units (CFU) per seed of *Bacillus* spp. strain B-67746 or a mutant thereof.

**DETAILED DESCRIPTION**

*Bacillus* spp. NRRL B-67746 is a rhizobacterium that was isolated from field trials testing disease management in cotton in the U.S. *Bacillus* spp. NRRL B-67746 is also known as AP211. Standard assays were conducted to determine that NRRL B-67746 produces siderophores and indole acetic acid, improves nitrogen assimilation and uptake, and is present in the nodules of soybeans. These properties are indicative of plant growth promotion properties. For example, siderophore production may cause improved iron availability in plants associated with the bacteria, as siderophores can complex iron, thus making it available for uptake by plants. In addition, plants use phytohormones, such as auxins, including IAA, to influence cellular function. Some studies have shown a positive correlation between microbial IAA production and plant growth. See Shahab, S., et al., "Indole Acetic Acid Production and Enhanced Plant Growth Promotion by Indigenous PSBs," African Journal of Agricultural Research, Vol. 4 (11), (November 2009), 1312-1316; see also Marques, A., et al., "Assessment of the Plant Growth Promotion Abilities of Six Bacterial Isolates Using Zea mays as Indicator Plant," Soil Biology and Biochemistry, 42 (2010), 1229-1235.

NRRL B-67746 was identified as a *Bacillus* strain by 16S ribosomal RNA sequencing. The 16S ribosomal DNA sequence for NRRL B-67746 is provided as SEQ ID NO: 1. Analyses of the whole genome sequence for NRRL B-67746 revealed that the strain is part of the *Bacillus amlyoliquefaciens* operational group, as described in Fan, B., et al., "Bacillus amyloliquefaciens, Bacillus velezensis, and Bacillus siamensis Form an "Operational Group B. amyloliquefaciens" within the B. subtilis Species Complex," Front Microbiol, vol. 8, p. 22 (2017). It also was determined based on whole genome sequencing that NRRL B-67746 is a *Bacillus velezensis.*

NRRL B-67746 was cultured in the lab and the resulting fermentation product was screened against fermentation products from several other rhizobacteria. NRRL B-67746-based compositions possess unique and superior plant growth promotion properties compared to other *Bacillus* spp. strains in the *Bacillus amyloliquefaciens* operational group and were, therefore, selected for further development. The Examples section provides details of such assays and comparisons.

The term "plant growth promotion" or "plant growth-promoting," as used herein, refers to the ability of a microorganism to exert a beneficial effect on plant growth, development or crop yield. For example, this may relate to increased length, increased total surface area, volume and/or fresh and/or dry weights of roots and shoots of treated plants or crops compared to untreated plants or crops. Other indications of a beneficial effect on plant growth include enhanced nodulation in soybeans, total increase in total finer roots and increased number of branching roots.

Plant growth promotion may also be characterized by improved plant vigor, including the following: (a) improved vitality of the plant, (b) improved quality of the plant and/or of the plant products, e.g., enhanced protein content, (c) improved visual appearance, (d) delay of senescence, (e) enhanced root growth and/or more developed root system (e.g., determined by the dry mass of the root), change in root architecture, (f) enhanced nodulation, in particular rhizobial nodulation, (g) longer panicles, (h) bigger leaf blade, (i) less dead basal leaves, (j) increased chlorophyll content, (k) increased nitrogen balance index, (l) decreased anthocyanins, (m) prolonged photosynthetically active period, (n) increased or improved plant stand density, (o) less plant verse (lodging), (p) increased plant weight, (q) increased plant height, (r) tillering increase, (s) stronger and/or more productive tillers, (t) less non-productive tillers, (u) enhanced photosynthetic activity and/or enhanced pigment content and thus greener leaf color, (v) earlier and/or improved germination, (w) improved and/or more uniform and/or earlier emergence, (x) increased shoot growth, (y) earlier flowering, (z) earlier fruiting, (aa) earlier grain maturity, (ab) less fertilizers needed, (ac) less seeds needed per plant area, (ad) improved association with beneficial symbionts like mycorrhizae, (ae) improved grain size and/or filling, such as in corn or wheat, (af) enhanced nutrient or environmental stress tolerance, and (ag) improved plant nutrient and/or water uptake.

According to the present invention, "increased yield" of a plant, in particular of an agricultural, silvicultural and/or ornamental plant means that the economic yield of a product of the respective plant (seed, tuber, leaf, flower) is increased by a measurable amount over the yield of the same product of the plant produced under the same conditions, but without the application of the composition of the invention or without the application of a parent bacterial strain, such as *Bacillus* spp. NRRL B-67746 or a mutant thereof. According to the present invention, it is preferred that the yield be increased by at least 0.5%, or by at least 1%, or by at least 2%, or by at least 4%, or by at least 5%, or by at least 10% when compared to appropriate controls.

Plant growth promotion ability refers to the ability of a strain to improve one of the above properties of a plant after application to a plant, plant part or to the locus of a plant compared to a plant that has not been treated with the plant growth promotion strain. In one embodiment, the strains of the present invention increase yield or total plant weight by at least about 0.5%, or by at least about 1%, or by at least about 2%, or by at least about 3%, or by at least about 4%, or by at least about 5%, or by at least about 6%, or by at least about 7%, or by at least about 8%, or by at least about 9%, or by at least about 10%, or by at least about 11%, or by at least about 12% when compared to plants produced under the same conditions but without treatment by a plant growth promoting strain or without the application of *Bacillus* spp. NRRL B-67746 or a mutant thereof.

The present invention also provides for mutants of *Bacillus* spp. strain NRRL B-67746 with enhanced plant growth-promotion properties

The term "mutant" refers to a genetic variant derived from *Bacillus* spp. strain NRRL B-67746. In one embodiment, the mutant has one or more or all of the identifying (functional) characteristics of *Bacillus* spp. strain NRRL B-67746.

In a particular instance, the mutant or a fermentation product thereof enhances plant health, including yield. Such mutants may be genetic variants having a genomic sequence that has greater than about 85%, greater than about 90%, greater than about 95%, greater than about 96% greater than about 97%, greater than about 98%, or greater than about 99% sequence identity to NRRL B-67746. The mutants have 16S rRNA sequence having at least about 98% sequence identity to the 16S rDNA sequence of Bacillus spp. strain NRRL B-67746.

The mutant strain can be any mutant strain that has one or more or all the identifying characteristics of *Bacillus* spp. strain NRRL B-67746 and, in particular, plant growth-promoting activity that is better than that of one or more of such strains. In yet another embodiment the mutant produces more indole acetic acid ("IAA") than does the parent strain.

Mutants may be obtained by treating cells of *Bacillus* spp. strain NRRL B-67746 with chemicals or irradiation or by selecting spontaneous mutants from a population of such *Bacillus* spp. strain NRRL B-67746 cells (such as phage resistant or antibiotic resistant mutants), by genome shuffling, as described below, or by other means well known to those practiced in the art, such as gene editing.

Genome shuffling among *Bacillus* strains can be facilitated through the use of a process called protoplast fusion. The process begins with the formation of protoplasts from vegetative bacillary cells. The removal of peptidoglycan cell wall, typically using lysozyme and an osmotic stabilizer, results in the formation of a protoplast. This process is visible under a light microscope with the appearance of spherical cells. Addition of polyethylene glycol (PEG) then induces fusion among protoplasts, allowing genetic contents of two or more cells to come in contact facilitating recombination and genome shuffling. Fused cells then repartition and are recovered on a solid growth medium. During recovery, protoplasts rebuild peptidoglycan cell walls, transitioning back to bacillary shape. See Schaeffer, et al., (1976) PNAS USA, vol. 73, 6:2151-2155).

A method of obtaining mutants includes generating mutants and then screening such mutants for enhanced plant growth promotion in comparison to the parent strain. In one embodiment, plant, crop, fruit or vegetable yield or plant mass from materials treated with the mutant strain is increased by about 1% to about 10%, by about 2% to about 15%, by about 2% to about 20% compared to plant, crop, fruit, or vegetable yield or plant mass from materials treated with the parent strain. In yet another aspect, plant, crop, fruit or vegetable yield of materials treated with the mutant strain is increased by about 1%, about 2%, about 3%, about 4%, about 5%, about 10%, about 20%, about 30%, compared to an untreated plant, crop, fruit, or vegetable or compared to a plant, crop, fruit or vegetable treated with the wildtype strain.

Such mutants may then be screened for improved production of various plant growth regulators, such as IAA, gibberellin, or cytokinin; improved production or activity of 1-aminocyclopropane-1-carboxylate (ACC) deaminase or superoxide dismutase; improved production of bacterial compounds that contribute to induced systemic resistance in plants, such as siderophores, salicylic acid and lipopolysaccharides; and/or for enhanced ability to promote plant growth promotion compared to parent strains. Multiple rounds of mutagenesis, with and without screening between rounds, may be used to generate and screen mutants. Fermentation products of mutants having one or more improved attributes may be produced and applied to plants to promote plant growth.

In a method according to the invention a composition containing *Bacillus* spp. NRRL B-67746 or a plant-growth-promoting mutant of the aforementioned strain can be applied to any plant or any part of any plant grown in any type of media used to grow plants (e.g., soil, vermiculite, shredded cardboard, and water) or applied to plants or the parts of plants grown aerially, such as orchids or staghorn ferns. The composition may for instance be applied by spraying, atomizing, vaporizing, scattering, dusting, watering, squirting, sprinkling, pouring or fumigating. As already indicated above, application may be carried out at any desired location where the plant of interest is positioned, such as agricultural, horticultural, forest, plantation, orchard, nursery, organically grown crops, turfgrass and urban environments.

The strains and compositions of the present invention can be applied to the seed, plant, or plant parts either as a powder, aqueous or non-aqueous solution. Powders can be either dry, wettable powders, or water dispersable granules. In some embodiments, the spore-forming bacterium is a solution, emulsifiable concentrate, wettable powder, suspension concentrate, soluble powder, granules, suspension-emulsion concentrate, natural and synthetic materials impregnated with active compounds and fine control release capsules. The strains and compositions of the present invention in a liquid or dry form may be admixed with the soil prior to, at the time of, or after planting. In one embodiment, the composition is in a liquid state admixed with the soil prior to or at the time of planting.

Compositions of the present invention include biologically pure cultures of the strains described herein. Biologically pure cultures of *Bacillus* spp. NRRL B-67746 and mutants derived therefrom may be obtained according to methods well known in the art, including by using the media and other methods described below.

Conventional large-scale microbial culture processes include submerged fermentation, solid state fermentation, or liquid surface culture. During the fermentation, as nutrients are depleted, cells begin the transition from growth phase to sporulation phase, such that the final product of fermentation is largely spores, metabolites and residual fermentation medium. Sporulation is part of the natural life cycle of *Bacillus* spp. and is generally initiated by the cell in response to nutrient limitation. Fermentation is configured to obtain high levels of colony forming units and to promote sporulation. The bacterial cells, spores and metabolites in culture media resulting from fermentation may be used directly or concentrated by conventional industrial methods, such as centrifugation or filtration such as tangential-flow filtration or depth filtration,

EP 3 986 138 B1

and evaporation.

Compositions of the present invention include the products of the microbial culture processes described herein. In embodiments in which submerged fermentation is used as the culture process, the product is referred to as a "fermentation broth." Such broth may be concentrated, as described above. The concentrated fermentation broth may be washed, for example, via a diafiltration process, to remove residual fermentation broth and metabolites. The term "broth concentrate," as used herein, refers to fermentation broth that has been concentrated by conventional industrial methods, as described above, but remains in liquid form.

The fermentation broth or broth concentrate can be dried with or without the addition of carriers using conventional drying processes or methods such as spray drying, freeze drying, tray drying, fluidized-bed drying, drum drying, or evaporation.

The resulting dry products may be further processed, such as by milling or granulation, to achieve a specific particle size or physical format. Carriers, described below, may also be added post-drying.

The term "fermentation product," as used herein, refers to fermentation broth, broth concentrate and/or dried fermentation broth or broth concentrate, referred to herein as dried fermentation broth.

Cell-free preparations of fermentation broth of the strains of the present invention can be obtained by any means known in the art, such as extraction, centrifugation and/or filtration of fermentation broth. Those of skill in the art will appreciate that so-called cell-free preparations may not be devoid of cells but rather are largely cell-free or essentially cell-free, depending on the technique used (e.g., speed of centrifugation) to remove the cells. The resulting cell-free preparation may be dried and/or formulated with components that aid in its application to plants or to plant growth media. Concentration methods and drying techniques described above for fermentation broth are also applicable to cell-free preparations.

In one embodiment, the fermentation product comprises at least about $1 \times 10^5$ colony forming units (CFU) of the microorganism (e.g., *Bacillus* spp. NRRL B-67746, or a plant health enhancing or plant growth promoting mutant strain thereof)/mL broth. In another embodiment, the fermentation product comprises at least about $1 \times 10^6$ CFU of the microorganism (*e.g., Bacillus* spp. NRRL B-67746 or a plant growth-promoting mutant strain thereof)/mL broth. In yet another embodiment, the fermentation product comprises at least about $1 \times 10^7$ CFU of the microorganism (e.g., *Bacillus* spp. NRRL B-67746 or a plant growth-promoting mutant strain thereof)/mL broth. In another embodiment, the fermentation product comprises at least about $1 \times 10^8$ CFU of the microorganism (e.g., *Bacillus* spp. NRRL B-67746 or a plant growth-promoting mutant strain thereof)/mL broth. In another embodiment, the fermentation product comprises at least about $1 \times 10^9$ CFU of the microorganism (e.g., *Bacillus* spp. NRRL B-67746 or a plant growth-promoting mutant strain thereof)/mL broth. In another embodiment, the fermentation product comprises at least about $1 \times 10^{10}$ CFU of the microorganism (e.g., *Bacillus* spp. NRRL B-67746 or a plant growth-promoting mutant strain thereof)/mL broth. In another embodiment, the fermentation product comprises at least about $1 \times 10^{11}$ CFU of the microorganism (e.g., *Bacillus* spp. NRRL B-67746 or a plant growth-promoting mutant strain thereof)/mL broth.

In another embodiment the fermentation product is a broth concentrate or a dried broth that comprises at least about $1 \times 10^8$ colony forming units (CFU) of the microorganism (e.g., *Bacillus* spp. NRRL B-67746 or a plant health enhancing mutant strain thereof)/mL broth. In another embodiment the fermentation product is a broth concentrate or a dried fermentation broth that comprises at least about $1 \times 10^9$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises at least about $1 \times 10^{10}$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises at least about $1 \times 10^{11}$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises at least about $1 \times 10^{12}$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises at least about $1 \times 10^{11}$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises at least about $1 \times 10^{14}$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises about $1 \times 10^8$ CFU to about $1 \times 10^{11}$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises about $1 \times 10^9$ CFU to about $1 \times 10^{13}$ CFU of the microorganism (e.g., *Bacillus* spp. NRRL B-67746 or a plant health enhancing mutant strain thereof)/mL broth. In another embodiment the fermentation product is a broth concentrate or a dried fermentation broth that comprises about $1 \times 10^{10}$ CFU to about $1 \times 10^{12}$ CFU of the microorganism (e.g., *Bacillus* spp. NRRL B-67746 or a plant health enhancing mutant strain thereof)/mL broth.

In another embodiment, the fermentation product comprises about 1%, about 2%, about 3%, about 4%, about 5%, about 6%, about 7%, about 8%, about 9%, about 10%, about 15%, about 20%, or about 25%, fermentation solids. Fermentation solids include spores, vegetative cells and unspent fermentation media. In certain aspects, the fermentation product comprises about 1% to about 60% fermentation solids, e.g., any range within 1% to 60%, such as 1% to 50%, 1% to 40%, 1% to 30%, 1% to 25%, 1% to 20%, 1% to 15%, 1% to 10%, 30% to 60%, 40% to 60%, etc. In certain aspects, the fermentation product comprises about 1% to about 25% fermentation solids, about 1% to about 20% fermentation solids, about 1% to about 15% fermentation solids, or about 1% to about 10% fermentation solids.

The inventive compositions can be used as such or, depending on their particular physical and/or chemical properties, in the form of their formulations or the use forms prepared therefrom, such as aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, gas (under pressure), gas generating product, foams, pastes, pesticide coated seed, suspension concentrates, oil dispersion, suspoemulsion concentrates, soluble concentrates, suspensions, including encapsulated suspensions, where, for example, an oil dispersion containing solid particles is encapsulated in water, wettable powders, soluble powders, dusts and granules, water-soluble and water-dispersible granules or tablets, water-soluble and water-dispersible powders for the treatment of seed, wettable powders, natural products and synthetic substances impregnated with active ingredient, microdispersions, and also microencapsulations in polymeric substances and in coating materials for seed, and also ULV cold-fogging and warm-fogging formulations.

In a certain aspect the biologically pure cultures or related fermentation products of the present invention are combined with an agriculturally acceptable carrier. Such agriculturally acceptable carriers may be the formulation inerts described below.

In a certain aspect the compositions of the present invention are formulated for seed treatment as dry dustable powders, flowable suspensions or suspension concentrates, liquid solutions, water soluble powers or water-dispersible powers.

In some embodiments, the inventive compositions are liquid formulations. Non-limiting examples of liquid formulations include suspension concentrates and oil dispersions. In other embodiments, the inventive compositions are solid formulations. Non-limiting examples of liquid formulations include freeze-dried powders and spray-dried powders.

Compositions of the present invention may include formulation inerts added to compositions comprising cells, cell-free preparations or metabolites to improve efficacy, stability, and usability and/or to facilitate processing, packaging and end-use application in agriculture. Such formulation inerts and ingredients may include carriers, stabilization agents, nutrients, or physical property modifying agents, which may be added individually or in combination. In some embodiments, the carriers may include liquid materials such as water, oil, and other organic or inorganic solvents and solid materials such as minerals, polymers, or polymer complexes derived biologically or by chemical synthesis. In some embodiments, the carrier is a binder or adhesive that facilitates adherence of the composition to a plant part, such as a seed or root. *See,* for example, Taylor, A.G., et al., "Concepts and Technologies of Selected Seed Treatments," Annu. Rev. Phytopathol. 28: 321-339 (1990). The stabilization agents may include anti-caking agents, anti-oxidation agents, desiccants, protectants or preservatives. The nutrients may include carbon, nitrogen, and phosphors sources such as sugars, polysaccharides, oil, proteins, amino acids, fatty acids and phosphates or micronutrients, such as manganese. The physical property modifiers may include bulking agents, wetting agents, thickeners, pH modifiers, rheology modifiers, dispersants, adjuvants, surfactants, antifreeze agents or colorants. In some embodiments, the composition comprising cells, cell-free preparation or metabolites produced by fermentation can be used directly with or without water as the diluent without any other formulation preparation. In some embodiments, the formulation inerts are added after concentrating fermentation broth and during and/or after drying.

In certain aspects, the fermentation product further comprises a formulation ingredient. The formulation ingredient may be a wetting agent, extender, solvent, spontaneity promoter, emulsifier, dispersant, frost protectant, thickener, and/or an adjuvant. In one embodiment, the formulation ingredient is a wetting agent.

Compositions of the present invention may include formulation ingredients added to compositions of the present invention to improve recovery, efficacy, or physical properties and/or to aid in processing, packaging and administration. Such formulation ingredients may be added individually or in combination.

The formulation ingredients may be added to compositions comprising cells, cell-free preparations and/or metabolites to improve efficacy, stability, and physical properties, usability and/or to facilitate processing, packaging and end-use application. Such formulation ingredients may include carriers, inerts, stabilization agents, preservatives, nutrients, or physical property modifying agents, which may be added individually or in combination. In some embodiments, the carriers may include liquid materials such as water, oil, and other organic or inorganic solvents and solid materials such as minerals, polymers, or polymer complexes derived biologically or by chemical synthesis. In some embodiments, the formulation ingredient is a binder, adjuvant, or adhesive that facilitates adherence of the composition to a plant part, such as leaves, seeds, or roots. *See,* for example, Taylor, A.G., et al., "Concepts and Technologies of Selected Seed Treatments," Annu. Rev. Phytopathol., 28: 321-339 (1990). The stabilization agents may include anti-caking agents, anti-oxidation agents, anti-settling agents, antifoaming agents, desiccants, protectants or preservatives. The nutrients may include carbon, nitrogen, and phosphorus sources such as sugars, polysaccharides, oil, proteins, amino acids, fatty acids, phosphates, macronutrients and micronutrients. Macronutrients include nitrogen, phosphorus, potassium, calcium, sulfur and magnesium. Micronutrients include zinc, boron, manganese, iron, copper, sodium, molybdenum, and nickel, typically in trace amounts. The physical property modifiers may include bulking agents, wetting agents, thickeners, pH modifiers, rheology modifiers, dispersants, adjuvants, surfactants, film-formers, hydrotropes, builders, antifreeze agents or colorants. In some embodiments, the composition comprising cells, cell-free preparation and/or metabolites produced by fermentation can be used directly with or without water as the diluent without any other formulation preparation. In a particular embodiment, a wetting agent, or a dispersant, is added to a dried broth concentrate, such as a freeze-dried or spray-dried powder. A wetting agent increases the spreading and penetrating properties, or a dispersant increases the dispersibility and solubility of the active ingredient (once diluted) when it is applied to surfaces. Exemplary wetting agents are known to those of skill in the art and include sulfosuccinates and derivatives, such as MULTIWET™ MO-70R (Croda Inc., Edison, NJ); siloxanes such as BREAK-THRU® (Evonik, Germany); nonionic compounds, such as ATLOX™ 4894 (Croda Inc., Edison, NJ); alkyl polyglucosides, such as TERWET® 3001 (Huntsman International LLC, The Woodlands, Texas); C12-C14 alcohol ethoxylate, such as TERGITOL® 15-S-15 (The Dow Chemical Company, Midland, Michigan); phosphate esters, such as RHODAFAC® BG-510 (Rhodia, Inc.); and alkyl ether carboxylates, such as EMULSOGEN™ LS (Clariant Corporation, North Carolina).

The present invention provides active compound combinations comprising (a) *Bacillus* spp. strain NRRL B-67746 or a plant-growth promoting mutant of this strain and (b) at least one further active compound active against at least one plant pathogen and/or plant pest or active in plant growth promotion, including fungicides, insecticides, nematicides, and products based on microbes.

Chemical Fungicide Mixing Partner (b)

In one embodiment, the active compound combinations according to the invention comprise as compound (b) at least one further active compound selected from the following groups

(1) inhibitors of the ergosterol synthesis,
(2) inhibitors of the respiratory chain at complex I or II,
(3) inhibitors of the respiratory chain at complex III,
(4) inhibitors of the mitosis and cell division,
(5) compounds capable of having a multisite action,
(6) compounds capable of inducing a host defense,
(7) inhibitors of the amino acid and/or protein biosynthesis,
(8) inhibitors of the ATP production,
(9) inhibitors of the cell wall synthesis,
(10) inhibitors of the lipid and membrane synthesis,
(11) inhibitors of the melanine biosynthesis,
(12) inhibitors of the nucleic acid synthesis,
(13) inhibitors of the signal transduction,
(14) compounds capable of acting as uncoupler,
(15) other fungicides selected from the group consisting of (15.001) abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetyl-aluminium, (15.013) fosetyl-calcium, (15.014) fosetyl-sodium, (15.015) methyl isothiocyanate, (15.016) metrafenone, (15.017) mildiomycin, (15.018) natamycin, (15.019) nickel dimethyldithiocarbamate, (15.020) nitrothal-isopropyl, (15.021) oxamocarb, (15.022) oxathiapiprolin, (15.023) oxyfenthiin, (15.024) pentachlorophenol and salts, (15.025) phosphorous acid and its salts, (15.026) propamocarb-fosetylate, (15.027) pyriofenone (chlazafenone), (15.028) tebufloquin, (15.029) tecloftalam, (15.030) tolnifanide, (15.031) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.032) 1-(4-{4-[(5S)-5-(2,6-difluorophenyl)-4,5-dihydro-1,2-oxazol-3-yl]-1,3-thiazol-2-yl }piperidin-1-yl)-2-[5-methyl-3-(trifluoromethyl)-1H-pyrazol-1-yl]ethanone, (15.033) 2-(6-benzylpyridin-2-yl)quinazoline, (15.034) dipymetitrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone,(15.037) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-{(5R)-3-[2-(1-{[3,5-bis(difluoromethyl)-1H-pyrazol-1-yl]acetyl }piperidin-4-yl)-1,3-thiazol-4-yl]-4,5-dihydro-1,2-oxazol-5-yl}-3-chlorophenyl methanesulfonate, (15.040) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.041) ipflufenoquin, (15.042) 2-{2-fluoro-6-[(8-fluoro-2-methylquinolin-3-yl)oxy]phenyl}propan-2-ol, (15.043) fluoxapiprolin, (15.044) 2-{3-[2-(1-{[3,5-bis(difluoromethyl)-1H-pyrazol-1-yl]acetyl }piperidin-4-yl)-1,3-thiazol-4-yl]-4,5-dihydro-1,2-oxazol-5-yl}phenyl methanesulfonate, (15.045) 2-phenylphenol and salts, (15.046) 3-(4,4,5-trifluoro-3,3-dimethyl-3,4-dihydroisoquinolin-1-yl)quinoline, (15.047) quinofumelin, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butanoic acid, (15.050) 5-amino-1,3,4-thiadiazole-2-thiol, (15.051) 5-chloro-N'-phenyl-N'-(prop-2-yn-1-yl)thiophene-2-sulfonohydrazide, (15.052) 5-fluoro-2-[(4-fluorobenzyl)oxy]pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene]amino}oxy)methyl]pyridin-2-yl}carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15.062) 5-fluoro-4-imino-3-methyl-1-[(4-methylphenyl)sulfonyl]-3,4-dihydropyrimidin-2(1H)-one, (15.063) aminopyrifen, (15.064) (N'-[2-chloro-4-(2-fluorophenoxy)-5-methylphenyl]-N-ethyl-N-methylimidoformamide), (15.065) (N'-(2-chloro-5-methyl-4-phenoxyphenyl)-N-ethyl-N-methylimidoformamide), (15.066) (2-{2-[(7,8-difluoro-2-methylquinolin-3-yl)oxy]-6-fluorophenyl}propan-2-ol), (15.067) (5-bromo-1-(5,6-dimethylpyridin-3-yl)-3,3-dimethyl-3,4-dihydroisoquinoline), (15.068) (3-(4,4-difluoro-5,5-dimethyl-4,5-dihydrothieno[2,3-c]pyridin-7-yl)quinoline), (15.069) (1-(4,5-dimethyl-1H-benzimidazol-1-yl)-4,4-difluoro-3,3-dimethyl-3,4-dihydroisoquinoline), (15.070) 8-fluoro-3-(5-fluoro-3,3-dimethyl-3,4-dihydroisoquinolin-1-yl)quinolone, (15.071) 8-fluoro-3-(5-fluoro-3,3,4,4-tetramethyl-3,4-dihydroisoquinolin-1-yl)quinolone, (15.072) 3-(4,4-difluoro-3,3-dimethyl-3,4-dihydroisoquinolin-1-yl)-8-fluoroquinoline, (15.073) (N-methyl-N-phenyl-4-[5-(trifluoromethyl)-1,2,4-oxadiazol-3-yl]benzamide), (15.074) methyl {4-[5-(trifluoromethyl)-1,2,4-oxadiazol-3-yl]phenyl } carbamate, (15.075) (N-{4-[5-(trifluoromethyl)-1,2,4-oxadiazol-3-yl]benzyl}cyclopropanecarboxamide), (15.076) N-methyl-4-(5-(trifluoromethyl)-1,2,4-oxadiazol-3-yl)benzamide, (15.077) N-[(E)-methoxyiminomethyl]-4-[5-(trifluoromethyl)-1,2,4-oxadiazol-3-yl]benzamide, (15.078) N-[(Z)-methoxyiminomethyl]-4-[5-(trifluoromethyl)-1,2,4-oxadiazol-3-yl]benzamide, (15.079) N-[4-[5-(trifluoromethyl)-1,2,4-oxadiazol-3-yl]phenyl-cyclopropanecarboxamide, (15.080) N-(2-fluorophenyl)-4-[5-(trifluoromethyl)-1,2,4-oxadiazol-3-yl]benzamide, (15.081) 2,2-difluoro-N-methyl-2-[4-[5-(trifluoromethyl)-1,2,4-oxadiazol-3-yl]phenyl]acetamide, (15.082) N-allyl-N-[[4-[5-(trifluoromethyl)-1,2,4-oxadiazol-3-yl)phenyl]methyl]acetamide, (15.083) N-[(E)-N-methoxy-C-methyl-carbonimidoyl]-4-(5-(trifluoromethyl)-1,2,4-oxadiazol-3-yl)-benzamide, (15.084) N-[(Z)-N-methoxy-C-methyl-carbonimidoyl]-4-[5-(trifluoromethyl)-1,2,4-oxadiazol-3-yl]benzamide, (15.085) N-allyl-N-[[4-[5-(trifluoromethyl)-1,2,4-oxadiazol-3-yl]phenyl]methyl]propanamide, (15.086) 4,4-dimethyl-1-[[4-[5-(trifluoromethyl)-1,2,4-oxadiazol-3-yl]phenyl]methyl]pyrrolidin-2-one, (15.087) N-methyl-4-[5-(trifluoromethyl)-1,2,4-oxadiazol-3-yl]-benzenecarbothioamide, (15.088) 5-methyl-1-[[4-[5-(trifluoromethyl)-1,2,4-oxadiazol-3-yl]phenyl]methyl]pyrrolidin-2-one, (15.089) N-((2,3-difluoro-4-[5-(trifluoromethyl)-1,2,4-oxadiazol-3-yl]phenyl]methyl]-3,3,3-trifluoro-propanamide, (15.090) 1-methoxy-1-methyl-3-[[4-[5-(trifluoromethyl}-1,2,4-oxadiazol-3-yl]phenyl]methyl]urea, (15.091) 1,1-diethyl-3-[[4-[5-(trifluoromethyl}-1,2,4-oxadiazol-3-yl]phenyl]methyl]urea, (15.092) N-[[4-[5-(trifluoromethyl)-1,2,4-oxadiazol-3-yl]phenyl]methyl]propanamide, (15.093) N-methoxy-N-[[4-[5-(trifluoromethyl)-1,2,4-oxadiazol-3-yl]phenyl]methyl]cyclopropanecarboxamide, (15.094) 1-methoxy-3-methyl-1-[[4-[5-(trifluoromethyl)-1,2,4-oxadiazol-3-yl]phenyl]methyl]urea, (15.095) N-methoxy-N-[[4-[5-(trifluoromethyl)-1,2,4-oxadiazol-3-yl]phenyl]methyl)cyclopropanecarboxamide, (15.096) N,2-dimethoxy-N-[[4-[5-(trifluoromethyl}-1,2,4-oxadiazol-3-yl]phenyl]methyl]propanamide, (15.097) N-ethyl-2-methyl-N-[[4-[5-(trifluoromethyl)-1,2,4-oxadiazol-3-yl)phenyl]methyl]propanamide, (15.098) 1-methoxy-3-methyl-1-[[4-[5-(trifluoromethyl)-1,2,4-oxadiazol-3-yl]phenyl]methyl]urea, (15.099) 1,3-dimethoxy-1-[[4-[5-(trifluoromethyl)-1,2,4-oxadiazol-3-yl]phenyl]methyl]urea, (15.100) 3-ethyl-1-methoxy-1-[[4-[5-(trifluoromethyl)-1,2,4-oxadiazol-3-yl]phenyl]methyl]urea, (15.101) 1-[[4-[5-(trifluoromethyl)-1,2,4-oxadiazol-3-yl]phenyl]methyl]piperidin-2-one, (15.102) 4,4-dimethyl-2-[[4-[5-(trifluoromethyl)-1,2,4-oxadiazol-3-yl]phenyl]-methyl]isooxazolidin-3-one, (15.103) 5,5-dimethyl-2-[[4-[5-(trifluoromethyl)-1,2,4-oxadiazol-3-yl]phenyl]methyl]isoxazolidin-3-one, (15.104) 3,3-dimethyl-1-[[4-[5-(trifluoromethyl)-1,2,4-oxadiazol-3-yl]phenyl]methyl]piperidin-2-one, (15.105) 1-[[3-fluoro-4-(5-(trifluoromethyl)-1,2,4-oxadiazol-3-yl]phenylmethyl]azepan-2-one, (15.106) 4,4-dimethyl-2-[[4-(5-(trifluoromethyl)-1,2,4-oxadiazol-3-yl]phenyl]-methyl]isoxazolidin-3-one, (15.107) 5,5-dimethyl-2-[[4-[5-(trifluoromethyl)-1,2,4-oxadiazol-3-yl]phenyl]methyl]isoxazolidin-3-one, (15.108) ethyl 1-{4-[5-(trifluoromethyl)-1,2,4-oxadiazol-3-yl]benzyl}-1H-pyrazole-4-carboxylate, (15.109) N,N-dimethyl-1-{4-[5-(trifluoromethyl)-1,2,4-oxadiazol-3-yl]benzyl}-1H-1,2,4-triazol-3-amine, (15.110) N-{2,3-difluoro-4-[5-(trifluoromethyl)-1,2,4-oxadiazol-3-yl]benzyl}butanamide, (15.111) N-(1-methylcyclopropyl)-4-[5-(trifluoromethyl)-1,2,4-oxadiazol-3-yl]benzamide, (15.112) N-(2,4-difluorophenyl)-4-[5-(trifluoromethyl)-1,2,4-oxadiazol-3-yl]benzamide, (15.113) 1-(5,6-dimethylpyridin-3-yl)-4,4-difluoro-3,3-dimethyl-3,4-dihydroisoquinoline, (15.114) 1-(6-(difluoromethyl)-5-methyl-pyridin-3-yl)-4,4-difluoro-3,3-dimethyl-3,4-dihydroisoquinoline, (15.115) 1-(5-(fluoromethyl)-6-methyl-pyridin-3-yl)-4,4-difluoro-3,3-dimethyl-3,4-dihydroisoquinoline, (15.116) 1-(6-(difluoromethyl)-5-methoxy-pyridin-3-yl)-4,4-difluoro-3,3-dimethyl-3,4-dihydroisoquinoline, (15.117) 4-[5-(trifluoromethyl)-1,2,4-oxadiazol-3-yl]phenyl dimethylcarbamate, (15.118) N-{4-[5-(trifluoromethyl)-1,2,4-oxadiazol-3-yl]phenyl} propanamide, (15.119) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.120) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.121) 3-[2-(1-{[3,5-bis(difluoromethyl)-1H-pyrazol-1-yl]acetyl}piperidin-4-yl)-1,3-thiazol-4-yl]-1,5-dihydro-2,4-benzodioxepin-6-yl methanesulfonate, (15.122) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate, (15.123) 1-(6,7-dimethylpyrazolo[1,5-a]pyridin-3-yl)-4,4-difluoro-3,3-dimethyl-3,4-dihydroisoquinoline, (15.124) 8-fluoro-N-(4,4,4-trifluoro-2-methyl-1-phenylbutan-2-yl)quinoline-3-carboxamide, (15.125) 8-fluoro-N-[(2S)-4,4,4-trifluoro-2-methyl-1-phenylbutan-2-yl]quinoline-3-carboxamide, (15.126) N-(2,4-dimethyl-1-phenylpentan-2-yl)-8-fluoroquinoline-3-carboxamide and (15.127) N-[(2S)-2,4-dimethyl-1-phenylpentan-2-yl]-8-fluoroquinoline-3-carboxamide.

Compound (B) is preferably selected from:

inhibitors of the ergosterol synthesis selected from the group consisting of (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (15,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2-[4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chlorocyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{ [rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(25,45,55)-1-(2,4-dichlorophenyl)-5-hydroxy-2,6,6-trimethylheptan-4-yl1]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) mefentrifluconazole, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{ [rel(2R,3S)-3-(2-chlorophenyl)-2-(2,4-difluorophenyl)oxiran-2-yl]methyl }-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)-sulfanyl]phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(lR)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropylcyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimidoformamide, (1.081) ipfentrifluconazole, (1.082) 2-[4-(4-chlorophenoxy)-2-(trifluoromethyl)phenyl]-1-(1H-1,2,4-triazol-1-yl)propan-2-ol, (1.083) 2-[6-(4-bromophenoxy)-2-(trifluoromethyl)-3-pyridyl]-1-(1,2,4-triazol-1-yl)propan-2-ol, (1.084) 2-[6-(4-chlorophenoxy)-2-(trifluoromethyl)-3-pyridyl]-1-(1,2,4-triazol-1-yl)propan-2-ol, (1.085) 3-[2-(1-chlorocyclopropyl)-3-(3-chloro-2-fluoro-phenyl)-2-hydroxypropyl]imidazole-4-carbonitrile, (1.086) 4-[[6-[rac-(2R)-2-(2,4-difluorophenyl)-1,1-difluoro-2-hydroxy-3-(5-thioxo-4H-1,2,4-triazol-1-yl)propyl]-3-pyridyl]oxy]benzonitrile, (1.087) N-isopropyl-N'-[5-methoxy-2-methyl-4-(2,2,2-trifluoro-1-hydroxy-1-phenylethyl)phenyl]-N-methylimidoformamide, (1.088) N'-{5-bromo-2-methyl-6-[(1-propoxypropan-2-yl)oxy]pyridin-3-yl}-N-ethyl-N-methylimidoformamide, (1.089) hexaconazole, (1.090) penconazole and (1.091) fenbuconazole;

inhibitors of the respiratory chain at complex I or II selected from the group consisting of (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028) inpyrfluxam, (2.029) 3-(difluoromethyl)-1-methyl-N-[(3S)-1, 1,3-trimethyl-2,3-dihydro-1H-inden-4-yl]-1H-pyrazole-4-carboxamide, (2.030) fluindapyr, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{[4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) isoflucypram, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide, (2.057) pyrapropoyne, (2.058) N-[rac-(1S,2S)-2-(2,4-dichlorophenyl)cyclobutyl]-2-(trifluoromethyl)-nicotinamide, (2.059) N-[(1S,2S)-2-(2,4-dichlorophenyl)cyclobutyl]-2-(trifluoromethyl)nicotinamide;

inhibitors of the respiratory chain at complex III selected from the group consisting of (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate, (3.030) metyltetraprole, (3.031) florylpicoxamid;

inhibitors of the mitosis and cell division selected from the group consisting of (4.001) carbendazim, (4.002) diethofencarb, (4.003) ethaboxam, (4.004) fluopicolide, (4.005) pencycuron, (4.006) thiabendazole, (4.007) thiophanate-methyl, (4.008) zoxamide, (4.009) pyridachlometyl, (4.010) 3-chloro-5-(4-chlorophenyl)-4-(2,6-difluorophenyl)-6-methylpyridazine, (4.011) 3-chloro-5-(6-chloropyridin-3-yl)-6-methyl-4-(2,4,6-trifluorophenyl)pyridazine, (4.012) 4-(2-bromo-4-fluorophenyl)-N-(2,6-difluorophenyl)-1,3-dimethyl-1H-pyrazol-5-amine, (4.013) 4-(2-bromo-4-fluorophenyl)-N-(2-bromo-6-fluorophenyl)-1,3-dimethyl-1H-pyrazol-5-amine, (4.014) 4-(2-bromo-4-fluorophenyl)-N-(2-bromophenyl)-1,3-dimethyl-1H-pyrazol-5-amine, (4.015) 4-(2-bromo-4-fluorophenyl)-N-(2-chloro-6-fluorophenyl)-1,3-dimethyl-1H-pyrazol-5-amine, (4.016) 4-(2-bromo-4-fluorophenyl)-N-(2-chlorophenyl)-1,3-dimethyl-1H-pyrazol-5-amine, (4.017) 4-(2-bromo-4-fluorophenyl)-N-(2-fluorophenyl)-1,3-dimethyl-1H-pyrazol-5-amine, (4.018) 4-(2-chloro-4-fluorophenyl)-N-(2,6-difluorophenyl)-1,3-dimethyl-1H-pyrazol-5-amine, (4.019) 4-(2-chloro-4-fluorophenyl)-N-(2-chloro-6-fluorophenyl)-1,3-dimethyl-1H-pyrazol-5-amine, (4.020) 4-(2-chloro-4-fluorophenyl)-N-(2-chlorophenyl)-1,3-dimethyl-1H-pyrazol-5-amine, (4.021) 4-(2-chloro-4-fluorophenyl)-N-(2-fluorophenyl)-1,3-dimethyl-1H-pyrazol-5-amine, (4.022) 4-(4-chlorophenyl)-5-(2,6-difluorophenyl)-3,6-dimethylpyridazine, (4.023) N-(2-bromo-6-fluorophenyl)-4-(2-chloro-4-fluorophenyl)-1,3-dimethyl-1H-pyrazol-5-amine, (4.024) N-(2-bromophenyl)-4-(2-chloro-4-fluorophenyl)-1,3-dimethyl-1H-pyrazol-5-amine, (4.025) N-(4-chloro-2,6-difluorophenyl)-4-(2-chloro-4-fluorophenyl)-1,3-dimethyl-1H-pyrazol-5-amine, (4.026) fluopimomide;

compounds capable of having a multisite action selected from the group consisting of (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile;

compounds capable of inducing a host defense selected from the group consisting of (6.001) acibenzolar-S-methyl, (6.002) isotianil, (6.003) probenazole, (6.004) tiadinil;

inhibitors of the amino acid and/or protein biosynthesis selected from the group consisting of (7.001) cyprodinil, (7.002) kasugamycin, (7.003) kasugamycin hydrochloride hydrate, (7.004) oxytetracycline, (7.005) pyrimethanil, (7.006) 3-(5-fluoro-3,3,4,4-tetramethyl-3,4-dihydroisoquinolin-1-yl)quinoline;

inhibitors of the ATP production selected from the group consisting of (8.001) silthiofam;

inhibitors of the cell wall synthesis selected from the group consisting of (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one;

inhibitors of the lipid and membrane synthesis selected from the group consisting of (10.001) propamocarb, (10.002) propamocarb hydrochloride, (10.003) tolclofos-methyl;

inhibitors of the melanine biosynthesis selected from the group consisting of (11.001) tricyclazole, (11.002) tolprocarb;

inhibitors of the nucleic acid synthesis selected from the group consisting of (12.001) benalaxyl, (12.002) benalaxyl-M (kiralaxyl), (12.003) metalaxyl, (12.004) metalaxyl-M (mefenoxam);

inhibitors of the signal transduction selected from the group consisting of (13.001) fludioxonil, (13.002) iprodione, (13.003) procymidone, (13.004) proquinazid, (13.005) quinoxyfen, (13.006) vinclozolin;

compounds capable of acting as uncoupler selected from the group consisting of (14.001) fluazinam and (14.002) meptyldinocap;

other fungicides selected from the group consisting of (15.001) abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetyl-aluminium, (15.013) fosetyl-calcium, (15.014) fosetyl-sodium, (15.015) methyl isothiocyanate, (15.016) metrafenone, (15.017) mildiomycin, (15.018) natamycin, (15.019) nickel dimethyldithiocarbamate, (15.020) nitrothal-isopropyl, (15.021) oxamocarb, (15.022) oxathiapiprolin, (15.023) oxyfenthiin, (15.024) pentachlorophenol and salts, (15.025) phosphorous acid and its salts, (15.026) propamocarb-fosetylate, (15.027) pyriofenone (chlazafenone), (15.028) tebufloquin, (15.029) tecloftalam, (15.030) tolnifanide, (15.031) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.032) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.033) 2-(6-benzylpyridin-2-yl)quinazoline, (15.034) dipymetitrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (15.037) 2-[3,5-bis(difluoromethyl)-1H-pyrazol-1-yl]-1-[4-(4-{ 5-[2-fluoro-6-(prop-2-yn-1-yloxy)phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl} -3-chlorophenyl methanesulfonate, (15.040) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.041) ipflufenoquin, (15.042) 2-{2-fluoro-6-[(8-fluoro-2-methylquinolin-3-yl)oxy]phenyl}propan-2-ol, (15.043) fluoxapiprolin, (15.044) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.045) 2-phenylphenol and salts, (15.046) 3-(4,4,5-trifluoro-3,3-dimethyl-3,4-dihydroisoquinolin-1-yl)quinoline, (15.047) quinofumelin, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butanoic acid, (15.050) 5-amino-1,3,4-thiadiazole-2-thiol, (15.051) 5-chloro-N'-phenyl-N'-(prop-2-yn-1-yl)thiophene-2-sulfonohydrazide, (15.052) 5-fluoro-2-[(4-fluorobenzyl)oxy]pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene]amino}oxy)methyl]pyridin-2-yl}carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15.062) 5-fluoro-4-imino-3-methyl-1-[(4-methylphenyl)sulfonyl]-3,4-dihydropyrimidin-2(1H)-one, (15.063) aminopyrifen, (15.064) (N'-[2-chloro-4-(2-fluorophenoxy)-5-methylphenyl]-N-ethyl-N-methylimidoformamide), (15.065) (N'-(2-chloro-5-methyl-4-phenoxyphenyl)-N-ethyl-N-methylimidoformamide), (15.066) (2-{2-[(7,8-difluoro-2-methylquinolin-3-yl)oxy]-6-fluorophenyl}propan-2-ol), (15.067) (5-bromo-1-(5,6-dimethylpyridin-3-yl)-3,3-dimethyl-3,4-dihydroisoquinoline), (15.068) (3-(4,4-difluoro-5,5-dimethyl-4,5-dihydrothieno[2,3-c]pyridin-7-yl)quinoline), (15.069) (1-(4,5-dimethyl-1H-benzimidazol-1-yl)-4,4-difluoro-3,3-dimethyl-3,4-dihydroisoquinoline), (15.070) 8-fluoro-3-(5-fluoro-3,3-dimethyl-3,4-dihydroisoquinolin-1-yl)quinolone, (15.071) 8-fluoro-3-(5-fluoro-3,3,4,4-tetramethyl-3,4-dihydroisoquinolin-1-yl)quinolone, (15.072) 3-(4,4-difluoro-3,3-dimethyl-3,4-dihydroisoquinolin-1-yl)-8-fluoroquinoline, (15.073) (N-methyl-N-phenyl-4-[5-(trifluoromethyl)-1,2,4-oxadiazol-3-yl]benzamide), (15.074) methyl {4-[5-(trifluoromethyl)-1,2,4-oxadiazol-3-yl]phenyl } carbamate, (15.075) (N-{4-[5-(trifluoromethyl)-1,2,4-oxadiazol-3-yl]benzyl}cyclopropanecarboxamide), (15.076) N-methyl-4-(5-(trifluoromethyl)-1,2,4-oxadiazol-3-yl)benzamide, (15.077) N-[(E)-methoxyiminomethyl]-4-[5-(trifluoromethyl)-1,2,4-oxadiazol-3-yl]benzamide, (15.078) N-[(Z)-methoxyiminomethyl]-4-[5-(trifluoromethyl)-1,2,4-oxadiazol-3-yl]benzamide, (15.079) N-[4-[5-(trifluoromethyl)-1,2,4-oxadiazol-3-yl]phenyl]cyclopropanecarboxamide, (15.080) N-(2-fluorophenyl)-4-[5-(trifluoromethyl)-1,2,4-oxadiazol-3-yl]benzamide, (15.081) 2,2-difluoro-N-methyl-2-[4-[5-(trifluoromethyl)-1,2,4-oxadiazol-3-yl]phenyl]acetamide, (15.082) N-allyl-N-[[4-[5-(trifluoromethyl)-1,2,4-oxadiazol-3-yl)phenyl]methyl]acetamide, (15.083) N-[(E)-N-methoxy-C-methyl-carbonimidoyl]-4-(5-(trifluoromethyl)-1,2,4-oxadiazol-3-yl)benzamide, (15.084) N-[(Z)-N-methoxy-C-methyl-carbonimidoyl]-4-[5-(trifluoromethyl)-1,2,4-oxadiazol-3-yl]benzamide, (15.085) N-allyl-N-[[4-[5-(trifluoromethyl)-1,2,4-oxadiazol-3-yl]phenylmethyl]propanamide, (15.086) 4,4-dimethyl-1-[[4-[5-(trifluoromethyl)-1,2,4-oxadiazol-3-yl]phenyl]methyl]pyrrolidin-2-one, (15.087) N-methyl-4-[5-(trifluoromethyl)-1,2,4-oxadiazol-3-yl]benzenecarbothioamide, (15.088) 5-methyl-1-[[4-[5-(trifluoromethyl)-1,2,4-oxadiazol-3-yl]phenyl]methyl]pyrrolidin-2-one, (15.089) N-((2,3-difluoro-4-[5-(trifluoromethyl)-1,2,4-oxadiazol-3-yl]phenyl]methyl]-3,3,3-trifluoro-propanamide, (15.090) 1-methoxy-1-methyl-3-[[4-[5-(trifluoromethyl)-1,2,4-oxadiazol-3-yl]phenyl]methyl]urea, (15.091) 1,1-diethyl-3-[[4-[5-(trifluoromethyl}-1,2,4-oxadiazol-3-yl]phenyl]methyl]urea, (15.092) N-[[4-[5-(trifluoromethyl)-1,2,4-oxadiazol-3-yl]phenyl]methyl]propanamide, (15.093) N-methoxy-N-[[4-[5-(trifluoromethyl)-1,2,4-oxadiazol-3-yl]phenyl]methyl]cyclopropanecarboxamide, (15.094) 1-methoxy-3-methyl-1-[[4-[5-(trifluoromethyl)-1,2,4-oxadiazol-3-yl]phenyl]methyl]urea, (15.095) N-methoxy-N-[[4-[5-(trifluoromethyl)-1,2,4-oxadiazol-3-yl]phenyl]methyl)cyclopropanecarboxamide, (15.096) N,2-dimethoxy-N-[[4-[5-(trifluoromethyl}-1,2,4-oxadiazol-3-yl]phenyl]methyl]propanamide, (15.097) N-ethyl-2-methyl-N-[[4-[5-(trifluoromethyl)-1,2,4-oxadiazol-3-yl]phenyl]methyl]propanamide, (15.098) 1-methoxy-3-methyl-1-[[4-[5-(trifluoromethyl)-1,2,4-oxadiazol-3-yl]phenyl]methyl]urea, (15.099) 1,3-dimethoxy-1-[[4-[5-(trifluoromethyl)-1,2,4-oxadiazol-3-yl]phenyl]methyl]urea, (15.100) 3-ethyl-1-methoxy-1-[[4-[5-(trifluoromethyl)-1,2,4-oxadiazol-3-yl]phenyl]methyl]urea, (15.101) 1-[[4-[5-(trifluoromethyl)-1,2,4-oxadiazol-3-yl]phenyl]methyl]piperidin-2-one, (15.102) 4,4-dimethyl-2-[[4-[5-(trifluoromethyl)-1,2,4-oxadiazol-3-yl]phenyl]methyl]isooxazolidin-3-one, (15.103) 5,5-dimethyl-2-[[4-[5-(trifluoromethyl)-1,2,4-oxadiazol-3-yl]phenyl]methyl]isoxazolidin-3-one, (15.104) 3,3-dimethyl-1-[[4-[5-(trifluoromethyl)-1,2,4-oxadiazol-3-yl]phenyl]methyl]-piperidin-2-one, (15.105) 1-[[3-fluoro-4-(5-(trifluoromethyl)-1,2,4-oxadiazol-3-yl]phenyl]methyl]-azepan-2-one, (15.106) 4,4-dimethyl-2-[[4-(5-(trifluoromethyl)-1,2,4-oxadiazol-3-yl]phenyl]-methyl]isoxazolidin-3-one, (15.107) 5,5-dimethyl-2-[[4-[5-(trifluoromethyl)-1,2,4-oxadiazol-3-yl]-phenyl]methyl]isoxazolidin-3-one, (15.108) ethyl 1-{4-[5-(trifluoromethyl)-1,2,4-oxadiazol-3-yl]benzyl}-1H-pyrazole-4-carboxylate, (15.109) N,N-dimethyl-1-{4-[5-(trifluoromethyl)-1,2,4-oxadiazol-3-yl]benzyl}-1H-1,2,4-triazol-3-amine, (15.110) N-{2,3-difluoro-4-[5-(trifluoromethyl)-1,2,4-oxadiazol-3-yl]benzyl}butanamide, (15.111) N-(1-methylcyclopropyl)-4-[5-(trifluoromethyl)-1,2,4-oxadiazol-3-yl]benzamide, (15.112) N-(2,4-difluorophenyl)-4-[5-(trifluoromethyl)-1,2,4-oxadiazol-3-yl]benzamide, (15.113) 1-(5,6-dimethylpyridin-3-yl)-4,4-difluoro-3,3-dimethyl-3,4-dihydroisoquinoline, (15.114) 1-(6-(difluoromethyl)-5-methyl-pyridin-3-yl)-4,4-difluoro-3,3-dimethyl-3,4-dihydroisoquinoline, (15.115) 1-(5-(fluoromethyl)-6-methyl-pyridin-3-yl)-4,4-difluoro-3,3-dimethyl-3,4-dihydroisoquinoline, (15.116) 1-(6-(difluoromethyl)-5-methoxy-pyridin-3-yl)-4,4-difluoro-3,3-dimethyl-3,4-dihydroisoquinoline, (15.117) 4-[5-(trifluoromethyl)-1,2,4-oxadiazol-3-yl]phenyl dimethylcarbamate, (15.118) N-{4-[5-(trifluoromethyl)-1,2,4-oxadiazol-3-yl]phenyl}propanamide, (15.119) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.120) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.121) 3-[2-(1-{[3,5-bis(difluoromethyl)-1H-pyrazol-1-yl]acetyl } piperidin-4-yl)-1,3-thiazol-4-yl]-1,5-dihydro-2,4-benzodioxepin-6-yl methanesulfonate, (15.122) 3-[2-(1-{[3,5-bis(difluoromethyl)-1H-pyrazol-1-yl] acetyl } piperidin-4-yl)-1, 3-thiazol-4-yl] -9-fluoro-1, 5-dihydro-2,4-benzodioxepin-6-yl methanesulfonate, (15.123) 1-(6,7-dimethylpyrazolo[1,5-a]pyridin-3-yl)-4,4-difluoro-3,3-dimethyl-3,4-dihydroisoquinoline, (15.124) 8-fluoro-N-(4,4,4-trifluoro-2-methyl-1-phenylbutan-2-yl)quinoline-3-carboxamide, (15.125) 8-fluoro-N-[(2S)-4,4,4-trifluoro-2-methyl-1-phenylbutan-2-yl]quinoline-3-carboxamide, (15.126) N-(2,4-dimethyl-1-phenylpentan-2-yl)-8-fluoroquinoline-3-carboxamide and (15.127) N-[(2S)-2,4-dimethyl-1-phenylpentan-2-yl]-8-fluoroquinoline-3-carboxamide.

## Chemical Pesticide Mixing Partner (b)

The active compounds identified here by their common names are known and are described, for example, in the pesticide handbook ("The Pesticide Manual" 16th Ed., British Crop Protection Council 2012) or can be found on the Internet (e.g., http://www.alanwood.net/pesticides). The classification is based on the current IRAC Mode of Action Classification Scheme at the time of filing of this patent application.

In a further embodiment of the invention, the active compound combinations comprise (a) *Bacillus* spp. strain NRRL B-67746 or a plant-growth promoting mutant of this strain and at least one compound (b) selected from the following groups.

(1) Acetylcholinesterase (AChE) inhibitors, preferably carbamates selected from alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb, or organophosphates selected from acephate, azamethiphos, azinphos-ethyl, azinphos-methyl, cadusafos, chlorethoxyfos, chlorfenvinphos, chlormephos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.

(2) GABA-gated chloride channel blockers, preferably cyclodiene-organochlorines selected from chlordane and endosulfan, or phenylpyrazoles (fiproles) selected from ethiprole and fipronil.

(3) Sodium channel modulators, preferably pyrethroids selected from acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1R)-trans-isomer], deltamethrin, empenthrin [(EZ)-(1R)-isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(1R)-trans-isomer], prallethrin, pyrethrins (pyrethrum), resmethrin, silafluofen, tefluthrin, tetramethrin, tetramethrin [(1R)- isomer)], tralomethrin and transfluthrin, or DDT or methoxychlor.

(4) Nicotinic acetylcholine receptor (nAChR) competitive modulators, preferably neonicotinoids selected from acetamiprid, clothianidin, dinotefuran, imidacloprid, nitenpyram, thiacloprid and thiamethoxam, or nicotine, or sulfoximines selected from sulfoxaflor, or butenolids selected from flupyradifurone, or mesoionics selected from triflumezopyrim.

(5) Nicotinic acetylcholine receptor (nAChR) allosteric modulators (Site I), preferably spinosyns selected from spinetoram and spinosad.

(6) Glutamate-gated chloride channel (GluCl) allosteric modulators, preferably avermectins/milbemycins selected from abamectin, emamectin benzoate, lepimectin and milbemectin.

(7) Juvenile hormone mimics, preferably juvenile hormone analogues selected from hydroprene, kinoprene and methoprene, or fenoxycarb or pyriproxyfen.

(8) Miscellaneous non-specific (multi-site) inhibitors, preferably alkyl halides selected from methyl bromide and other alkyl halides, or chloropicrine or sulphuryl fluoride or borax or tartar emetic or methyl isocyanate generators selected from diazomet and metam.

(9) Chordotonal organ TRPV channel modulators, preferably pyridine azomethanes selected from pymetrozine and pyrifluquinazone, or pyropenes selected from afidopyropen.

(10) Mite growth inhibitors affecting CHS1 selected from clofentezine, hexythiazox, diflovidazin and etoxazole.

(11) Microbial disruptors of the insect gut membranes selected from *Bacillus thuringiensis* subspecies *israelensis, Bacillus sphaericus, Bacillus thuringiensis* subspecies *aizawai, Bacillus thuringiensis* subspecies *kurstaki, Bacillus thuringiensis* subspecies *tenebrionis,* and *B.t.* plant proteins selected from Cry1Ab, Cry1Ac, Cry1Fa, Cry1A.105, Cry2Ab, Vip3A, mCry3A, Cry3Ab, Cry3Bb and Cry34Ab1/35Ab1.

(12) Inhibitors of mitochondrial ATP synthase, preferably ATP disruptors selected from diafenthiuron, or organotin compounds selected from azocyclotin, cyhexatin and fenbutatin oxide, or propargite or tetradifon.

(13) Uncouplers of oxidative phosphorylation via disruption of the proton gradient selected from chlorfenapyr, DNOC and sulfluramid.

(14) Nicotinic acetylcholine receptor channel blockers selected from bensultap, cartap hydrochloride, thiocylam and thiosultap-sodium.

(15) Inhibitors of chitin biosynthesis affecting CHS1, preferably benzoylureas selected from bistrifluron, chlorfluazuron, diflubenzuron, flucycloxuron, flufenoxuron, hexaflumuron, lufenuron, novaluron, noviflumuron, teflubenzuron and triflumuron.

(16) Inhibitors of chitin biosynthesis, type 1 selected from buprofezin.

(17) Moulting disruptor (in particular for Diptera, i.e., dipterans) selected from cyromazine.

(18) Ecdysone receptor agonists, preferably diacylhydrazines selected from chromafenozide, halofenozide, methoxyfenozide and tebufenozide.

(19) Octopamine receptor agonists selected from amitraz.

(20) Mitochondrial complex III electron transport inhibitors selected from hydramethylnone, acequinocyl, fluacrypyrim and bifenazate.

(21) Mitochondrial complex I electron transport inhibitors, preferably METI acaricides and insecticides selected from fenazaquin, fenpyroximate, pyrimidifen, pyridaben, tebufenpyrad and tolfenpyrad, or rotenone (Derris).

(22) Voltage-dependent sodium channel blockers, preferably oxadiazines selected from indoxacarb, or semicarbazones selected from metaflumizone.

(23) Inhibitors of acetyl CoA carboxylase, preferably tetronic and tetramic acid derivatives selected from spirodiclofen, spiromesifen, spiropidion and spirotetramat.

(24) Mitochondrial complex IV electron transport inhibitors, preferably phosphides selected from aluminium phosphide, calcium phosphide, phosphine and zinc phosphide, or cyanides selected from calcium cyanide, potassium cyanide and sodium cyanide.

(25) Mitochondrial complex II electron transport inhibitors, preferably *beta*-ketonitrile derivatives selected from cyenopyrafen and cyflumetofen, or carboxanilides selected from pyflubumide.

(28) Ryanodine receptor modulators, preferably diamides selected from chlorantraniliprole, cyantraniliprole, cyclaniliprole, flubendiamide and tetraniliprole.

(29) Chordotonal organ modulators (with undefined target site) selected from flonicamid.

(30) GABA-gated chlorid channel allosteric modulators, preferably *meta*-diamides selected from broflanilide, or isoxazoles selected from fluxametamide.

(31) Baculoviruses, preferably Granuloviruses (GVs) selected from *Cydia pomonella* GV and *Thaumatotibia leucotreta* (GV), or Nucleopolyhedroviruses (NPVs) selected from *Anticarsia gemmatalis* MNPV and *Helicoverpa armigera* NPV.

(32) Nicotinic acetylcholine receptor allosteric modulators (Site II) selected from GS-omega/kappa HXTX-Hv1a peptide.

(33) further active compounds selected from Acynonapyr, Afoxolaner, Azadirachtin, Benclothiaz, Benzoximate, Benzpyrimoxan, Bromopropylate, Chinomethionat, Chloroprallethrin, Cryolite, Cyclobutrifluram or Cyclobutrifen (CAS 1460292-16-3), Cycloxaprid, Cyetpyrafen, Cyhalodiamide, Dicloromezotiaz, Dicofol, Dimpropyridaz, epsilon-Metofluthrin, epsilon-Momfluthrin, Flometoquin, Fluazaindolizine, Fluensulfone, Flufenerim, Flufenoxystrobin, Flufiprole, Fluhexafon, Fluopyram, Flupyrimin, Fluralaner, Fufenozide, Fupentiofenox (CAS 1472050-04-6), Guadipyr, Heptafluthrin, Imidaclothiz, Iprodione, Isocycloseram, kappa-Bifenthrin, kappa-Tefluthrin, Lotilaner, Meperfluthrin, Oxazosulfyl, Paichongding, Pyridalyl, Pyrifluquinazon, Pyriminostrobin, Spirobudiclofen, Tetramethylfluthrin, Tetrachlorantraniliprole, Tigolaner, Tioxazafen, Thiofluoximate, Iodomethane, Triflupentoxide (CAS 1472050-04-6); furthermore preparations based on *Bacillus firmus* (I-1582, BIONEEM®, VOTIVO®), and also the following compounds: 1-{2-fluoro-4-methyl-5-[(2,2,2-trifluoroethyl)sulphinyl]phenyl}-3-(trifluoromethyl)-1H-1,2,4-triazole-5-amine (known from WO 2006/043635) (CAS 885026-50-6), {1'-[(2E)-3-(4-chlorophenyl)prop-2-en-1-yl]-5-fluorospiro[indol-3,4'-piperidin]-1(2H)-yl}(2-chloropyridin-4-yl)methanone (known from WO 2003/106457) (CAS 637360-23-7), 2-chloro-N-[2-{1-[(2E)-3-(4-chlorophenyl)prop-2-en-1-yl]piperidin-4-yl}-4-(trifluoromethyl)phenyl]isonicotinamide (known from WO 2006/003494) (CAS 872999-66-1), 3-(4-chloro-2,6-dimethylphenyl)-4-hydroxy-8-methoxy-1,8-diazaspiro[4.5]dec-3-en-2-one (known from WO 2010/052161) (CAS 1225292-17-0), 3-(4-chloro-2,6-dimethylphenyl)-8-methoxy-2-oxo-1,8-diazaspiro[4.5]dec-3-en-4-yl ethyl carbonate (known from EP 2647626) (CAS 1440516-42-6), 4-(but-2-yn-1-yloxy)-6-(3,5-dimethylpiperidin-1-yl)-5-fluoropyrimidine (known from WO 2004/099160) (CAS 792914-58-0), PF1364 (known from JP 2010/018586) (CAS 1204776-60-2), (3E)-3-[1-[(6-chloro-3-pyridyl)methyl]-2-pyridylidene]-1,1,1-trifluoro-propan-2-one (known from WO 2013/144213) (CAS 1461743-15-6), , N-[3-(benzylcarbamoyl)-4-chlorophenyl]-1-methyl-3-(pentafluoroethyl)-4-(trifluoromethyl)-1H-pyrazole-5-carboxamide (known from WO 2010/051926) (CAS 1226889-14-0), 5-bromo-4-chloro-N-[4-chloro-2-methyl-6-(methylcarbamoyl)phenyl]-2-(3-chloro-2-pyridyl)pyrazole-3-carboxamide (known from CN 103232431) (CAS 1449220-44-3), 4-[5-(3,5-dichlorophenyl)-4,5-dihydro-5-(trifluoromethyl)-3-isoxazolyl]-2-methyl-N-(cis-1-oxido-3-thietanyl)-benzamide, 4-[5-(3,5-dichlorophenyl)-4,5-dihydro-5-(trifluoromethyl)-3-isoxazolyl]-2-methyl-N-(*trans*-1-oxido-3-thietanyl)-benzamide and 4-[(5S)-5-(3,5-dichlorophenyl)-4,5-dihydro-5-(trifluoromethyl)-3-isoxazolyl]-2-methyl-N-(*cis*-1-oxido-3-thietanyl)benzamide (known from WO 2013/050317 A1) (CAS 1332628-83-7), N-[3-chloro-1-(3-pyridinyl)-1H-pyrazol-4-yl]-N-ethyl-3-[(3,3,3-trifluoropropyl)sulfinyl]-propanamide, (+)-N-[3-chloro-1-(3-pyridinyl)-1H-pyrazol-4-yl]-N-ethyl-3-[(3,3,3-trifluoropropyl)sulfinyl]-propanamide and (-)-N-[3-chloro-1-(3-pyridinyl)-1H-pyrazol-4-yl]-N-ethyl-3-[(3,3,3-trifluoropropyl)sulfinyl]-propanamide (known from WO 2013/162715 A2, WO 2013/162716 A2, U.S. Patent Application Publication No. 2014/0213448 A1) (CAS 1477923-37-7), 5-[[(2E)-3-chloro-2-propen-1-yl]amino]-1-[2,6-dichloro-4-(trifluoromethyl)phenyl]-4-[(trifluoromethyl)sulfinyl]-1H-pyrazole-3-carbonitrile (known from CN 101337937 A) (CAS 1105672-77-2), 3-bromo-N-[4-chloro-2-methyl-6-[(methylamino)thioxomethyl]phenyl]-1-(3-chloro-2-pyridinyl)-1H-pyrazole-5-carboxamide, (Liudaibenjiaxuanan, known from CN 103109816 A) (CAS 1232543-85-9); N-[4-chloro-2-[[(1,1-dimethylethyl)amino]carbonyl]-6-methylphenyl]-1-(3-chloro-2-pyridinyl)-3-(fluoromethoxy)-1H-Pyrazole-5-carboxamide (known from WO 2012/034403 A1) (CAS 1268277-22-0), N-[2-(5-amino-1,3,4-thiadiazol-2-yl)-4-chloro-6-methylphenyl]-3-bromo-1-(3-chloro-2-pyridinyl)-1H-pyrazole-5-carboxamide (known from WO 2011/085575 A1) (CAS 1233882-22-8), 4-[3-[2,6-dichloro-4-[(3,3-dichloro-2-propen-1-yl)oxy]phenoxy]propoxy]-2-methoxy-6-(trifluoromethyl)-pyrimidine (known from CN 101337940 A) (CAS 1108184-52-6); (2E)- and 2(Z)-2-[2-[4-(cyanophenyl)-1-[3-(trifluoromethyl)phenyl]ethylidene]-N-[4-(difluoromethoxy)phenyl]-hydrazinecarboxamide (known from CN 101715774 A) (CAS 1232543-85-9); 3-(2,2-dichloroethenyl)-2,2-dimethyl-4-(1H-benzimidazol-2-yl)phenyl-cyclopropanecarboxylic acid ester (known from CN 103524422 A) (CAS 1542271-46-4); (4aS)-7-chloro-2,5-dihydro-2-[[(methoxycarbonyl)[4-[(trifluoromethyl)thio]phenyl]amino]carbonyl]-indeno[1,2-e][1,3,4]oxadiazine-4a(3H)-carboxylic acid methyl ester (known from CN 102391261 A) (CAS 1370358-69-2); 6-deoxy-3-O-ethyl-2,4-di-O-methyl-, 1-[N-[4-[1-[4-(1,1,2,2,2-pentafluoroethoxy)phenyl]-1H-1,2,4-triazol-3-yl]phenyl]carbamate]-α-L-mannopyranose (known from U.S. Patent Application Publication No. 2014/0275503 A1) (CAS 1181213-14-8); 8-(2-cyclopropylmethoxy-4-trifluoromethyl-phenoxy)-3-(6-trifluoromethyl-pyridazin-3-yl)-3-aza-bicyclo[3.2.1]octane (CAS 1253850-56-4), (8-*anti*)-8-(2-cyclopropylmethoxy-4-trifluoromethyl-phenoxy)-3-(6-trifluoromethyl-pyridazin-3-yl)-3-aza-bicyclo[3.2.1]octane (CAS 933798-27-7), (8-syn)-8-(2-cyclopropylmethoxy-4-trifluoromethyl-phenoxy)-3-(6-trifluoromethyl-pyridazin-3-yl)-3-aza-bicyclo[3.2.1]octane (known from WO 2007/040280 A1, WO 2007/040282 A1) (CAS 934001-66-8), N-[3-chloro-1-(3-pyridinyl)-1H-pyrazol-4-yl]-N-ethyl-3-[(3,3,3-trifluoropropyl)thio]-propanamide (known from WO 2015/058021 A1, WO 2015/058028 A1) (CAS 1477919-27-9) and N-[4-(aminothioxomethyl)-2-methyl-6-[(methylamino)carbonyl]phenyl]-3-bromo- 1-(3-chloro-2-pyridinyl)-1*H*-pyrazole-5-carboxamide (known from CN 103265527 A) (CAS 1452877-50-7), 5-(1,3-dioxan-2-yl)-4-[[4-(trifluoromethyl)phenyl]methoxy]-pyrimidine (known from WO 2013/115391 A1) (CAS 1449021-97-9), 3-(4-chloro-2,6-dimethylphenyl)-8-methoxy-1-methyl-1,8-diazaspiro[4.5]decane-2,4-dione (known from WO 2014/187846 A1) (CAS 1638765-58-8), 3-(4-chloro-2,6-dimethylphenyl)-8-methoxy-1-methyl-2-oxo-1,8-diazaspiro[4.5]dec-3-en-4-yl-carbonic acid ethyl ester (known from O 2010/066780 A1, WO 2011151146 A1) (CAS 1229023-00-0), 4-[(5S)-5-(3,5-Dichloro-4-fluorophenyl)-4,5-dihydro-5-(trifluoromethyl)-3-isoxazolyl]-N-[(4R)-2-ethyl-3-oxo-4-isoxazolidinyl]-2-methyl-benzamide (known from WO 2011/067272, WO 2013/050302) (CAS 1309959-62-3).

Biological Active Compounds as Mixing Partner (b)

In a further embodiment of the invention, the active compound combinations comprise (a) *Bacillus* spp. strain NRRL B-67746 or a plant-growth promoting mutant of this strain and at least one compound (b) selected from biological active compounds such as biological fungicides or pesticides or compounds for plant growth promotion. Biological active compounds comprise in particular bacteria, fungi, yeasts, plant extracts and products formed by microorganisms, including proteins and secondary metabolites.

As used herein, the term "biological control" is defined as control of harmful organisms such as a phytopathogenic fungi and/or insects and/or acarids and/or nematodes by the use or employment of an active compound.

As used herein, the term "biological active compound" is defined as an organism other than the harmful organisms and/or proteins or secondary metabolites produced by such an organism for the purpose of biological control or plant growth promotion. Mutants of the second organism shall be included within the definition of the biological control active compound. The term "mutant" refers to a variant of the parental strain as well as methods for obtaining a mutant or variant in which the pesticidal activity is greater than that expressed by the parental strain. The "parent strain" is defined herein as the original strain before mutagenesis. To obtain such mutants the parental strain may be treated with a chemical such as N-methyl-N'-nitro-N-nitrosoguanidine, ethylmethanesulfone, or by irradiation using gamma, x-ray, or UV-irradiation, or by other means well known to those skilled in the art. Known mechanisms of biological control active compounds comprise enteric bacteria that control root rot by out-competing fungi for space on the surface of the root. Bacterial toxins, such as antibiotics, have been used to control pathogens. The toxin can be isolated and applied directly to the plant or the bacterial species may be administered so it produces the toxin *in situ*.

A "variant" is a strain having all the identifying characteristics of the NRRL or ATCC Accession Numbers as indicated in this text and can be identified as having a genome that hybridizes under conditions of high stringency to the genome of the NRRL or ATCC Accession Numbers.

"Hybridization" refers to a reaction in which one or more polynucleotides react to form a complex that is stabilized via hydrogen bonding between the bases of the nucleotide residues. The hydrogen bonding may occur by Watson-Crick base pairing, Hoogstein binding, or in any other sequence-specific manner. The complex may comprise two strands forming a duplex structure, three or more strands forming a multi-stranded complex, a single self-hybridizing strand, or any combination of these. Hybridization reactions can be performed under conditions of different "stringency". In general, a low stringency hybridization reaction is carried out at about 40°C in 10 X SSC or a solution of equivalent ionic strength/temperature. A moderate stringency hybridization is typically performed at about 50°C in 6 X SSC, and a high stringency hybridization reaction is generally performed at about 60°C in 1 X SSC.

A variant of the indicated NRRL or ATCC Accession Number may also be defined as a strain having a genomic sequence that is greater than 85%, more preferably greater than 90% or more preferably greater than 95% sequence identity to the genome of the indicated NRRL or ATCC Accession Number. A polynucleotide or polynucleotide region (or a polypeptide or polypeptide region) has a certain percentage (for example, 80%, 85%, 90%, or 95%) of "sequence identity" to another sequence means that, when aligned, that percentage of bases (or amino acids) are the same in comparing the two sequences. This alignment and the percent homology or sequence identity can be determined using software programs known in the art, for example, those described in Current Protocols in Molecular Biology (F. M. Ausubel et al., eds., 1987).

NRRL is the abbreviation for the Agricultural Research Service Culture Collection, an international depositary authority for the purposes of deposing microorganism strains under the Budapest Treaty on the International Recognition of the Deposit of Microorganisms for the Purposes of Patent Procedure, having the address National Center for Agricultural Utilization Research, Agricultural Research Service, U.S. Department of Agriculture, 1815 North University Street, Peoria, Illinois 61604, U.S.A.

ATCC is the abbreviation for the American Type Culture Collection, an international depositary authority for the purposes of deposing microorganism strains under the Budapest Treaty on the International Recognition of the Deposit of Microorganisms for the Purposes of Patent Procedure, having the address ATCC Patent Depository, 10801 University Boulevard, Manassas, Virginia 10110, U.S.A.

The biological active compound may be a bactericidally active compound. Such bactericidally biological active compounds comprise

(A1) bacteria, such as (A1.1) *Bacillus subtilis,* in particular strain QST713/AQ713 (available as SERENADE® OPTI or SERENADE® ASO from Bayer CropScience LP, US, having Accession No. NRRL B-21661, U.S. Patent No. 6,060,051); (A1.2) *Bacillus* sp., in particular strain D747 (available as DOUBLE NICKEL® from Kumiai Chemical Industry Co., Ltd.), having Accession No. FERM BP-8234, U.S. Patent No. 7,094,592; (A1.3) *Bacillus pumilus,* in particular strain BU F-33, having NRRL Accession No. 50185 (available as part of the CARTISSA® product from BASF, EPA Reg. No. 71840-19); (A1.4) *Bacillus subtilis* var. *amyloliquefaciens* strain FZB24 having Accession No. DSM 10271 (available from Novozymes as TAEGRO® or TAEGRO® ECO (EPA Registration No. 70127-5); (A1.5) a *Paenibacillus* sp. strain having Accession No. NRRL B-50972, or Accession No. NRRL B-67129, WO 2016/154297; (A1.6) *Bacillus subtilis* strain BU1814, (available as VELONDIS® EXTRA from BASF SE); (A1.7) *Bacillus mojavensis* strain R3B (Accession No. NCAIM (P) B001389) (WO 2013/034938) from Certis USA LLC, a subsidiary of Mitsui & Co.; (A1.8) *Bacillus subtilis* CX-9060 from Certis USA LLC, a subsidiary of Mitsui & Co.; (A1.9) *Paenibacillus polymyxa,* in particular strain AC-1 (e.g., TOPSEED® from Green Biotech Company Ltd.); (A1.10) *Pseudomonas proradix* (e.g., PRORADIX® from Sourcon Padena); (A1.11) *Pantoea agglomerans,* in particular strain E325 (Accession No. NRRL B-21856) (available as BLOOMTIME BIOLOGICAL™ FD BIOPESTICIDE from Northwest Agri Products); and

(A2) fungi, such as (A2.1) *Aureobasidium pullulans* strain DSM14940, strain DSM14941 or mixtures of strains DSM14940 and DSM14941 (e.g., BOTECTOR® and BLOSSOM PROTECT® from Bio-Ferm, CH); (A2.2) *Pseudozyma aphidis* (as disclosed in WO 2011/151819 by Yissum Research Development Company of the Hebrew University of Jerusalem); (A2.3) *Saccharomyces cerevisiae,* in particular strains CNCM No. I-3936, CNCM No. I-3937, CNCM No. I-3938 or CNCM No. I-3939 (WO 2010/086790) from Lesaffre et Compagnie, FR.

The biological active compound may be a fungicidally biological active compound or a biological active compound active against oomycetes. Such biological active compounds comprise

(B1) bacteria, for example (B1.1) *Bacillus subtilis,* in particular strain QST713/AQ713 (available as SERENADE® OPTI or SERENADE® ASO from Bayer CropScience LP, US, having Accession No. NRRL B-21661 and described in U.S. Patent No. 6,060,051); (B1.2) *Bacillus pumilus,* in particular strain QST2808 (available as SONATA® from Bayer CropScience LP, US, having Accession No. NRRL B-30087 and described in U.S. Patent No. 6,245,551); (B1.3) *Bacillus pumilus,* in particular strain GB34 (available as YIELD SHIELD® from Bayer AG, DE); (B1.4) *Bacillus pumilus,* in particular strain BU F-33, (having Accession No. NRRL 50185 (available as part of the CARTISSA® product from BASF, EPA Reg. No. 71840-19)); (B1.5) *Bacillus amyloliquefaciens,* in particular strain D747 (available as DOUBLE NICKEL™ from Kumiai Chemical Industry Co., Ltd. Certis, U.S., having accession number FERM BP-8234, and disclosed in U.S. Patent No. 7,094,592); (B1.6) *Bacillus subtilis* Y1336 (available as BIOBAC® WP from Bion-Tech, Taiwan, registered as a biological fungicide in Taiwan under Registration Nos. 4764, 5454, 5096 and 5277); (B1.7) *Bacillus amyloliquefaciens* var. *subtilis* strain MBI 600 (available as SUBTILEX® from BASF SE), having Accession Number NRRL B-50595, U.S. Patent No. 5,061,495; (B1.8) *Bacillus subtilis* strain GB03 (available as KODIAK® from Bayer AG, DE); (B1.9) *Bacillus subtilis* var. *amyloliquefaciens* strain FZB24 having Accession No. DSM 10271 (available from Novozymes as TAEGRO® or TAEGRO® ECO (EPA Registration No. 70127-5))(available from Novozymes Biologicals Inc., Salem, Virginia or Syngenta Crop Protection, LLC, Greensboro, North Carolina as the fungicide TAEGRO® or TAEGRO® ECO (EPA Registration No. 70127-5); (B1.10) *Bacillus mycoides,* isolate J , having Accession No. B-30890 (available as BMJ TGAI® WG and LIFEGARD™ from Certis USA LLC, a subsidiary of Mitsui & Co.)(available as BMJ TGAI® or WG from Certis USA); (B1.11) *Bacillus licheniformis,* in particular strain SB3086 , having Accession No. ATCC 55406, WO 2003/000051 (available as ECOGUARD® Biofungicide and GREEN RELEAF™ from Novozymes)(available as ECOGUARD™ Biofungicide and GREEN RELEAF™ from Novozymes); (B1.12) a *Paenibacillus* sp. strain having Accession No. NRRL B-50972, or Accession No. NRRL B-67129, and described in International Patent Publication No. WO 2016/154297; (B1.13) *Bacillus subtilis* strain BU1814, (available as VELONDIS® PLUS, VELONDIS® FLEX and VELONDIS® EXTRA from BASF SE); (B1.14) *Bacillus subtilis* CX-9060 from Certis USA LLC, a subsidiary of Mitsui & Co.; (B1.15) *Bacillus amyloliquefaciens* strain F727 (also known as strain MBI110) (NRRL Accession No. B-50768; WO 2014/028521) (STARGUS® from Marrone Bio Innovations); (B1.16) *Bacillus amyloliquefaciens* strain FZB42, Accession No. DSM 23117 (available as RHIZOVITAL® from ABiTEP, DE); (B1.17) *Bacillus licheniformis* FMCH001 and *Bacillus subtilis* FMCH002 (QUARTZO® (WG) and PRESENCE® (WP) from FMC Corporation); (B1.18) *Bacillus mojavensis* strain R3B (Accession No.

NCAIM (P) B001389) (WO 2013/034938) from Certis USA LLC, a subsidiary of Mitsui & Co.; (B1.19) *Paenibacillus polymyxa* ssp. *plantarum* (WO 2016/020371) from BASF SE; (B1.20) *Paenibacillus epiphyticus* (WO 2016/020371) from BASF SE; (B.1.21) *Pseudomonas chlororaphis* strain AFS009, having Accession No. NRRL B-50897, WO 2017/019448 (e.g., HOWLER™ and ZIO® from AgBiome Innovations, U.S.); (B1.22) *Pseudomonas chlororaphis,* in particular strain MA342 (e.g., CEDOMON®, CERALL®, and CEDRESS® by Bioagri and Koppert); (B1.23) *Streptomyces lydicus* strain WYEC108 (also known as *Streptomyces lydicus* strain WYCD108US) (ACTINO-IRON® and ACTINOVATE® from Novozymes); (B1.24) *Agrobacterium radiobacter* strain K84 (e.g., GALLTROL-A® from AgBio-Chem, CA); (B1.25) *Agrobacterium radiobacter* strain K1026 (e.g., NOGALLTM from BASF SE); (B1.26) *Bacillus subtilis* KTSB strain (FOLIACTIVE® from Donaghys); (B1.27) *Bacillus subtilis* IAB/BS03 (AVIV™ from STK Bio-Ag Technologies); (B1.28) *Bacillus subtilis* strain Y1336 (available as BIOBAC® WP from Bion-Tech, Taiwan, registered as a biological fungicide in Taiwan under Registration Nos. 4764, 5454, 5096 and 5277); (B1.29) *Bacillus amyloliquefaciens* isolate B246 (e.g., AVOGREEN™ from University of Pretoria); (B1.30) *Bacillus methylotrophicus* strain BAC-9912 (from Chinese Academy of Sciences' Institute of Applied Ecology); (B1.31) *Pseudomonas proradix* (e.g., PRORADIX® from Sourcon Padena); (B1.32) *Streptomyces griseoviridis* strain K61 (also known as *Streptomyces galbus* strain K61) (Accession No. DSM 7206) (MYCOSTOP® from Verdera; PREFENCE® from BioWorks; cf. Crop Protection 2006, 25, 468-475); (B1.33) *Pseudomonas fluorescens* strain A506 (e.g., BLIGHTBAN® A506 by NuFarm); and.

(B2) fungi, for example: (B2.1) *Coniothyrium minitans* strain CON/M/91-8 (Accession No. DSM-9660; e.g., CONTANS® from Bayer CropScience Biologies GmbH); (B2.2) *Talaromyces flavus* strain V117b; (B2.3) *Trichoderma atroviride* strain CNCM I-1237 (e.g., ESQUIVE® WP from Agrauxine, FR); (B2.4) *Gliocladium catenulatum* (Synonym: *Clonostachys rosea f. catenulate)* strain J1446 (e.g., PRESTOP® by Lallemand); (B2.5) *Trichoderma viride* strain B35 (Pietr et al., 1993, Zesz. Nauk. A R w Szczecinie 161: 125-137); (B2.6) *Metschnikowia fructicola* strain NRRL Y-30752; (B2.7) *Gliocladium roseum* (also known as *Clonostachys rosea f. rosea),* in particular strain 321U from Adjuvants Plus, strain ACM941 as disclosed in Xue (Efficacy of *Clonostachys rosea* strain ACM941 and fungicide seed treatments for controlling the root tot complex of field pea, Can Jour Plant Sci 83(3): 519-524), strain IK726 (Jensen, D.F., et al. "Development of a Biocontrol Active Compound for Plant Disease Control with Special Emphasis on the Near Commercial Fungal Antagonist Clonostachys rosea Strain 'IK726'"; Australas Plant Pathol. 2007; 36:95-101); (B2.8) *Trichoderma asperellum* strain SKT-1, having Accession No. FERM P-16510 (e.g., ECO-HOPE® from Kumiai Chemical Industry); *Trichoderma asperellum* T34 (ASPERELLO® from Biobest Group NV and T34 BIOCONTROL® by Biocontrol Technologies S.L., ES); (B2.9) *Trichoderma asperelloides* JM41R (Accession No. NRRL B-50759) (TRICHO PLUS® from BASF SE); (B2.10) *Trichoderma asperellum* strain ICC 012 (Isagro); *Trichoderma atroviride* strain SC1, having Accession No. CBS 122089, WO 2009/116106 and U.S. Patent No. 8,431,120, (from Bi-PA), strain 77B (T77 from Andermatt Biocontrol), strain LU132 (e.g., SENTINEL® from Agrimm Technologies Limited), strain having Accession No. NMI V08/002387, strain having Accession No. NMI V08/002388, strain having Accession No. NMI V08/002389, strain having Accession No. NMI V08/002390, strain having Accession No. ATCC 20476 (IMI 206040), strain SKT-1, having Accession No. FERM P-16510, JP Patent Publication (Kokai) 11-253151 A, strain SKT-2, having Accession No. FERM P-16511, JP Patent Publication (Kokai) 11-253151 A, strain SKT-3, having Accession No. PERM P-17021, JP Patent Publication (Kokai) 11-253151 A; (B2.11) *Trichoderma harzianum* strain T-22 (e.g., TRIANUM-P® from Andermatt Biocontrol or Koppert), strain DB 103 (available as T-GRO® 7456 by Dagutat Biolab); (B2.12) *Trichoderma virens* (also known as *Gliocladium virens),* in particular strain GL-21 (e.g., SOILGARD® by Certis, US); (B2.13) *Trichoderma harzianum* strain Cepa Simb-T5 (from Simbiose Agro); (B2.14) *Aspergillus flavus* strain NRRL 21882 (products known as AFLA-GUARD® from Syngenta/ChemChina); (B2.15) *Chaetomium cupreum* (Accession No. CABI 353812) (e.g., BIOKUPRUM™ by AgriLife); (B2.16) *Microsphaeropsis ochracea;* (B2.17) *Saccharomyces cerevisiae* strain LASO2 (from Agro-Levures et Dérivés), strain LAS117 cell walls (CEREVISANE® from Lesaffre; ROMEO® from BASF SE), strains CNCM No. I-3936, CNCM No. I-3937, CNCM No. I-3938, CNCM No. I-3939 (WO 2010/086790) from Lesaffre et Compagnie, FR; (B2.18) *Trichoderma virens* strain G-41, formerly known as *Gliocladium virens* (Accession No. ATCC 20906) (e.g., ROOTSHIELD® PLUS WP and TURFSHIELD® PLUS WP from BioWorks, US); (B2.19) *Gliocladium roseum* strain 321 U, having Accession No. ATCC 10406, from W.F. Stoneman Company LLC; (B2.20) *Trichoderma hamatum,* having Accession No. ATCC 28012; (B2.21) *Trichoderma harzianum* strain TH35 (e.g., ROOT-PRO® by Mycontrol); (B2.22) *Ampelomyces quisqualis* strain AQ10, having Accession No. CNCM I-807 (e.g., AQ 10® by IntrachemBio Italia); (B2.23) *Aureobasidium pullulans* having Accession No. DSM 14940, strain having Accession No. DSM 14941; (B2.24) *Cladosporium cladosporioides* strain H39, having Accession No. CBS122244, U.S. Patent Application Publication No. 2010/0291039 (by Stichting Dienst Landbouwkundig Onderzoek); (B2.25) *Lecanicillium longisporum* (formerly known as *Lecanicillium lecanii* and also *Verticillium lecanii*) strain KV01 (e.g., VERTALEC® by Koppert BV, Netherlands/Arysta); (B2.26) *Penicillium vermiculatum;* (B2.27) *Pichia anomala* strain WRL-076, having Accession No. NRRL Y-30842, U.S. Patent No. 7,579,183; (B2.28) *Trichoderma asperellum* strain kd (e.g., T-GRO from Andermatt Biocontrol); (B2.29) *Trichoderma polysporum* strain IMI 206039, having Accession No. IMI 206039 (e.g., BINAB® TF WP by BINAB Bio-Innovation AB, Sweden); (B2.30) *Trichoderma stromaticum,* having Accession No. Ts3550 (e.g., TRICOVAB® by CEPLAC, Brazil); (B2.31) *Ulocladium oudemansii* strain U3, having Accession No. NM 99/06216 (e.g., BOTRY-ZEN® by Botry-Zen Ltd, New Zealand and BOTRYSTOP® from BioWorks, Inc.); (B2.32) *Verticillium albo-atrum* (formerly *V. dahliae),* having Accession No. WCS850, deposited at the Central Bureau for Fungi Cultures (e.g., DUTCH TRIG® by Tree Care Innovations); (B2.33) *Verticillium chlamydosporium;* (B2.34) mixtures of *Trichoderma asperellum* strain ICC 012 (also known as *Trichoderma harzianum* ICC012), having Accession No. CABI CC IMI 392716, (B2.35) *Trichoderma gamsii* (formerly *T. viride*) strain ICC 080, having Accession No. IMI 392151 (e.g., BIO-TAM™ from Isagro USA, Inc. and BIODERMA® by Agrobiosol de Mexico, S.A. de C.V.); (B2.36) *Phlebiopsis gigantea* strain VRA 1992 (ROTSTOP® C from Danstar Ferment); (B2.37) *Penicillium steckii* (DSM 27859; WO 2015/067800) from BASF SE; (B2.38) *Chaetomium globosum* (available as RIVADIOM® by Rivale); (B2.39) *Cryptococcus flavescens,* strain 3C (NRRL Y-50378); (B2.40) *Dactylaria candida;* (B2.41) *Dilophosphora alopecuri* (available as TWIST FUNGUS®); (B2.42) *Fusarium oxysporum,* strain Fo47 (available as FUSACLEAN® by Natural Plant Protection); (B2.43) *Lecanicillium lecanii* (formerly known as *Verticillium lecanii*) strain KV01 (available as VERTALEC® by Koppert/Arysta); (B2.44) *Penicillium vermiculatum;* (B2.45) *Pichia anomala,* strain WRL-076 (NRRL Y-30842); (B2.46) *Pseudozyma flocculosa,* strain PF-A22 UL (available as SPORODEX® L by Plant Products Co., CA); (B2.47) *Trichoderma gamsii* (formerly *T. viride*), strain ICC080 (IMI CC 392151 CABI) (available as BIODERMA® by AGROBIOSOL DE MEXICO, S.A. DE C.V.); *Trichoderma polysporum,* strain IMI 206039 (available as BINAB TF® WP by BINAB Bio-Innovation AB, Sweden); *Trichoderma stromaticum* (available as TRICOVAB® by Ceplac, Brazil); *Tsukamurella paurometabola,* strain C-924 (available as HEBERNEM® by Gavac); *Ulocladium oudemansii,* in particular strain HRU3 (available as BOTRY-ZEN® by Botry-Zen Ltd, NZ); *Verticillium albo-atrum* (formerly *V. dahliae),* strain WCS850 (CBS 276.92); *Trichoderma fertile* (e.g., product TRICHOPLUS® from BASF); *Muscodor roseus,* in particular strain A3-5 (Accession No. NRRL 30548); mixtures of *Trichoderma asperellum* strain ICC 012 and *Trichoderma gamsii* strain ICC 080 (e.g., BIO-TAM™ from Isagro USA, Inc. and BIODERMA® by Agrobiosol de Mexico, S.A. de C.V.); *Simplicillium lanosoniveum.*

The biological active compound may be a plant growth promotion active compound. Such plant growth promotion active compounds comprise

(E1) bacteria selected from (E1.1) *Bacillus pumilus,* in particular strain QST2808 (having Accession No. NRRL No. B-30087) or strain GB34 (e.g., YIELD SHIELD® from Bayer CropScience, DE); (E1.2) *Bacillus subtilis,* in particular strain QST713/AQ713 (having NRRL Accession No. B-21661 and described in U.S. Patent No. 6,060,051; available as SERENADE® OPTI or SERENADE® ASO from Bayer CropScience LP, US), strain AQ30002 (having Accession No. NRRL B-50421 and described in U.S. Patent Application No. 13/330,576), strain AQ30004 (and NRRL B-50455 and described in U.S. Patent Application No. 13/330,576), strain MBI 600 (e.g., SUBTILEX® from BASF SE); (E1.3) *Sinorhizobium meliloti* strain NRG-185-1 (NITRAGIN® GOLD from Bayer CropScience); (E1.4) *Bacillus subtilis* strain BU1814, (available as TEQUALIS® from BASF SE); (E1.5) *Bacillus subtilis* rm303 (RHIZOMAX® from Biofilm Crop Protection); (E1.6) *Bacillus amyloliquefaciens* strain pm414 (LOLI-PEPTA® from Biofilm Crop Protection), strain SB3281 (ATCC No. PTA-7542; WO 2017/205258), strain TJ1000 (available as QUIKROOTS® from Novozymes), strain IN937a strain FZB42 (e.g., RHIZOVITAL® from ABiTEP, DE), strain BS27 (Accession No. NRRL B-5015); (E1.7) *Bacillus mycoides* strain BT155 (NRRL No. B-50921), strain EE118 (NRRL No. B-50918), strain EE141 (NRRL No. B-50916), strain BT46-3 (NRRL No. B-50922), (E1.8) *Bacillus cereus* family member EE128 (NRRL No. B-50917) or family member EE349 (NRRL No. B-50928), (E1.9) *Bacillus thuringiensis* BT013A (NRRL No. B-50924) also known as *Bacillus thuringiensis* 4Q7, (E1.10) *Bacillus firmus,* in particular strain CNCM I-1582 (e.g., VOTIVO® from BASF SE); (E1.11) a mixture of *Bacillus licheniformis* FMCH001 and *Bacillus subtilis* FMCH002 (available as QUARTZO® (WG), PRESENCE® (WP) from FMC Corporation); (E1.12) *Bacillus cereus,* in particular strain BP01 (ATCC 55675; e.g., MEPICHLOR® from Arysta Lifescience, US); (E1.13) *Bradyrhizobium japonicum* (e.g., OPTIMIZE® from Novozymes); (E1.14) *Mesorhizobium cicer* (*e.g.,* NODULATOR® from BASF SE); (E1.15) *Rhizobium leguminosarium biovar viciae* (*e.g.,* NODULATOR® from BASF SE); (E1.16) *Delftia acidovorans,* in particular strain RAY209 (e.g., BIOBOOST® from Brett Young Seeds); (E1.17) *Lactobacillus* sp. (e.g., LACTOPLANT® from Lacto-PAFI); (E1.18) *Paenibacillus polymyxa,* in particular strain AC-1 (e.g., TOPSEED® from Green Biotech Company Ltd.); (E1.19) *Pseudomonas proradix* (e.g., PRORADIX® from Sourcon Padena); (E1.20) *Azospirillum brasilense* (e.g., VIGOR® from KALO, Inc.); (E1.21) *Azospirillum lipoferum* (e.g., VERTEX-IF™ from TerraMax, Inc.); (E1.22) a mixture of *Azotobacter vinelandii* and *Clostridium pasteurianum* (available as INVIGORATE® from Agrinos); (E1.23) *Pseudomonas aeruginosa,* in particular strain PN1; (E1.24) *Rhizobium leguminosarum,* in particular *bv. viceae* strain Z25 (Accession No. CECT 4585); (E1.25) *Azorhizobium caulinodans,* in particular strain ZB-SK-5; (E1.26) *Azotobacter chroococcum,* in particular strain H23; (E1.27) *Azotobacter vinelandii,* in particular strain ATCC 12837; (E1.28) *Bacillus siamensis,* in particular strain KCTC 13613T; (E1.29) *Bacillus tequilensis,* in particular strain NII-0943; (E1.30) *Serratia marcescens,* in particular strain SRM (Accession No. MTCC 8708); (E1.31) *Thiobacillus* sp. (e.g., CROPAID® from Cropaid Ltd UK); (E1.22) *Bacillus megaterium,* in particular strain NRRL B-67357 (see WO2018/129016); *Bacillus psychrosaccharolyticus* strain PTA-123720 (see WO2018/128986); and

(E2) fungi selected from (E2.1) *Purpureocillium lilacinum* (previously known as *Paecilomyces lilacinus*) strain 251 (AGAL 89/030550; e.g., BIOACT® from Bayer CropScience Biologics GmbH); (E2.2) *Penicillium bilaii* strain ATCC 22348 (e.g., JUMPSTART® from Acceleron BioAg), (E2.3) *Talaromyces flavus* strain V117b; (E2.4) *Trichoderma atroviride* strain CNCM I-1237 (e.g., ESQUIVE® WP from Agrauxine, FR), (E2.5) *Trichoderma viride,* e.g., strain B35 (Pietr et al., 1993, Zesz. Nauk. A R w Szczecinie 161: 125-137); (E2.6) *Trichoderma atroviride* strain LC52 (also known as *Trichoderma atroviride* strain LU132; e.g., SENTINEL® from Agrimm Technologies Limited); (E2.7) *Trichoderma atroviride* strain SC1 described in International Application No. PCT/IT2008/000196); (E2.8) *Trichoderma asperellum* strain kd (e.g., T-GRO® from Andermatt Biocontrol); (E2.9) *Trichoderma asperellum* strain Eco-T (Plant Health Products, ZA); (E2.10) *Trichoderma harzianum* strain T-22 (e.g., TRIANUM-P® from Andermatt Biocontrol or Koppert); (E2.11) *Myrothecium verrucaria* strain AARC-0255 (e.g., DITERA™ from Valent Biosciences); (E2.12) *Penicillium bilaii* strain ATCC 20851; (E2.13) *Pythium oligandrum* strain M1 (ATCC 38472; e.g., POLYVERSUM® from Biprepraty, CZ); (E2.14) *Trichoderma virens* strain GL-21 (e.g., SOILGARD® from Certis, USA); (E2.15) *Verticillium albo-atrum* (formerly V. *dahliae*) strain WCS850 (CBS 276.92; e.g., DUTCH TRIG® from Tree Care Innovations); (E2.16) *Trichoderma atroviride,* in particular strain No. V08/002387, strain NMI No. V08/002388, strain No. NMI No. V08/002389, strain No. NMI No. V08/002390; (E2.17) *Trichoderma harzianum* strain ITEM 908, strain TSTh20, strain 1295-22; (E2.18) *Pythium oligandrum* strain DV74; (E2.19) *Rhizopogon amylopogon* (e.g., comprised in MYCO-SOL® from Helena Chemical Company); (E2.20) *Rhizopogon fulvigleba* (e.g., comprised in MYCO-SOL® from Helena Chemical Company); (E2.21) *Trichoderma koningii;* (E2.22) *Glomus aggregatum;* (E2.23) *Glomus clarum;* (E2.24) *Glomus deserticola;* (E2.25) *Glomus etunicatum;* (E2.26) *Glomus intraradices;* (E2.27) *Glomus monosporum;* (E2.28) *Glomus mosseae;* (E2.29) *Laccaria bicolor;* (E2.30) *Rhizopogon luteolus;* (E2.31) *Rhizopogon tinctorus;* (E2.32) *Rhizopogon villosulus;* (E2.33) *Scleroderma cepa;* (E2.34) *Suillus granulatus;* (E2.35) *Suillus punctatapies;* (E2.36) *Trichoderma virens* strain GI-3; (E2.37) *Pseudozyma aphidis* (e.g., from Yissum Research Development Company of the Hebrew University of Jerusalem).

Plant growth promoting biological active compounds also include (F) bacteria and fungi which can be added as "inoculant" to plants or plant parts or plant organs and which, by virtue of their particular properties, promote plant growth and plant health. Examples are: *Agrobacterium* spp., *Azorhizobium caulinodans, Azospirillum* spp., *Azotobacter* spp., *Bradyrhizobium* spp., *Burkholderia* spp., in particular *Burkholderia cepacia* (formerly known as *Pseudomonas cepacia), Gigaspora* spp., or *Gigaspora monosporum, Glomus* spp., *Laccaria* spp., *Lactobacillus buchneri, Paraglomus* spp., *Pisolithus tinctorus, Pseudomonas* spp., *Rhizobium* spp., in particular *Rhizobium trifolii, Rhizopogon* spp., *Scleroderma* spp., *Suillus* spp., and *Streptomyces* spp.; and

(G) plant extracts and products formed by microorganisms including proteins and secondary metabolites which can be used as biological control active compounds, such as *Allium sativum, Artemisia absinthium,* azadirachtin, BIOKEEPER® WP, *Cassia nigricans, Celastrus angulatus, Chenopodium anthelminticum,* chitin, ARMOUR-ZEN®, *Dryopteris filix-mas, Equisetum arvense,* FORTUNE AZA®, FUNGASTOP®, HEADS UP® *(Chenopodium quinoa* saponin extract), Pyrethrum/Pyrethrins, *Quassia amara, Quercus, Quillaja,* Regalia, "REQUIEM® insecticide", rotenone, ryania/ryanodine, *Symphytum officinale, Tanacetum vulgare,* thymol, TRIACT® 70, TRICON®, *Tropaeulum majus, Urtica dioica,* VERATRIN®, *Viscum album, Brassicaceae* extract, in particular oilseed rape powder or mustard powder.

Plant growth promoting biological active compounds may also comprise one or more lipo-chitooligosaccharides (LCOs), chitooligosaccharides (COs), and/or chitinous compounds. LCOs, sometimes referred to as symbiotic nodulation (Nod) signals (or Nod factors) or as Myc factors, consist of an oligosaccharide backbone of $\beta$-1,4-linked N-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues. *See,* e.g., Denarie et al., Ann. Rev. Biochem. 65:503 (1996); Diaz et al., Mol. Plant-Microbe Interactions 13:268 (2000); Hungria et al., Soil Biol. Biochem. 29:819 (1997); Hamel et al., Planta 232:787 (2010); and Prome et al., Pure & Appl. Chem. 70(1):55 (1998), the contents and disclosures of which are incorporated herein by reference.

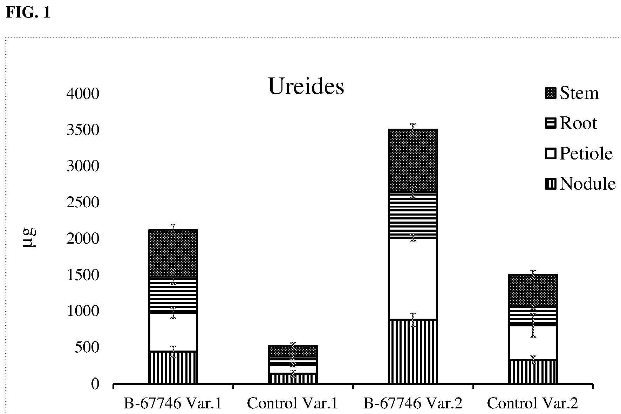

LCOs may be synthetic or obtained from any suitable source. See, e.g., WO 2005/063784, WO 2007/117500 and WO 2008/071674, the contents and disclosures of which are incorporated herein by reference. In some aspects, a synthetic LCO may have the basic structure of a naturally occurring LCO but contains one or more modifications or substitutions, such as those described in Spaink, Crit. Rev. Plant Sci. 54:257 (2000). LCOs and precursors for the construction of LCOs (e.g., COs, which may themselves be useful as a biologically active ingredient) can be synthesized by genetically engineered organisms. *See, e.g.,* Samain et al., Carbohydrate Res. 302:35 (1997); Cottaz et al., Meth. Eng. 7(4):311 (2005); and Samain et al., J. Biotechnol. 72:33 (1999) (e.g., Fig. 1 therein, which shows structures of COs that can be made recombinantly in *E. coli* harboring different combinations of genes *nodBCHL),* the contents and disclosures of which are incorporated herein by reference.

LCOs (and derivatives thereof) may be included or utilized in compositions in various forms of purity and can be used alone or in the form of a culture of LCO-producing bacteria or fungi. For example, OPTIMIZE® (commercially available from Monsanto Company (St. Louis, MO)) contains a culture of *Bradyrhizobium japonicum* that produces LCO. Methods to provide substantially pure LCOs include removing the microbial cells from a mixture of LCOs and the microbe, or continuing to isolate and purify the LCO molecules through LCO solvent phase separation followed by HPLC chromatography as described, for example, in U.S. Patent No. 5,549,718. Purification can be enhanced by repeated HPLC and the purified LCO molecules can be freeze-dried for long-term storage.

In one embodiment, the biological control active compound is selected from *Bacillus subtilis* strain QST713/AQ713; a *Paenibacillus* sp. having Accession No. NRRL B-50972, or Accession No. NRRL B-67129, *Bacillus pumilus* strain BU F-33; *Bacillus subtilis* strain BU1814; *Bacillus* sp. D747; *Bacillus subtilis* var. *amyloliquefaciens* strain FZB24; *Bacillus mojavensis* strain R3B; *Bacillus subtilis* CX-9060, *Bacillus pumilus* strain QST2808, *Coniothyrium minitans* strain CON/M/91-8; *Talaromyces flavus* strain V117b; *Trichoderma atroviride* strain CNCM I-1237; *Gliocladium catenulatum* strain J1446; *Trichoderma viride* strain B35; *Metschnikowia fructicola* strain NRRL Y-30752; *Gliocladium roseum* strain 321U, strain ACM941, strain IK726; *Trichoderma asperellum* strain SKT-1; *Trichoderma asperellum* T34; *Trichoderma asperellum* strain T34; *Trichoderma asperelloides* JM41R; *Sinorhizobium meliloti* strain NRG-185-1, *Purpureocillium lilacinum* strain 251, *Penicillium bilaii,* strain ATCC 22348, *Trichoderma atroviride* strain LC52; *Trichoderma atroviride* strain SC1; *Trichoderma asperellum* strain kd; *Trichoderma asperellum* strain Eco-T; *Trichoderma harzianum* strain T-22; *Myrothecium verrucaria* strain AARC-0255; *Penicillium bilaii* strain ATCC 20851.

In another embodiment, the biological active compound is selected from *Bacillus subtilis* strain QST713/AQ713; a *Paenibacillus* sp. strain having Accession No. NRRL B-50972, or Accession No. NRRL B-67129, *Bacillus pumilus* strain QST2808, *Coniothyrium minitans* strain CON/M/91-8; *Trichoderma atroviride* strain CNCM I-1237; *Gliocladium catenulatum* strain J1446; *Trichoderma viride* strain B35, *Metschnikowia fructicola* strain NRRL Y-30752; *Sinorhizobium meliloti* strain NRG-185-1, *Purpureocillium lilacinum* strain 251, *Penicillium bilaii,* strain ATCC 22348.

Biological active compounds comprise bacteria such as spore-forming bacteria, root-colonising bacteria and bacteria which act as biological fungicides, insecticides, acaricides, or nematicides or as plant growth promotor.

In one further embodiment of the invention, the active compound combinations according to the invention comprise (a) *Bacillus* spp. strain NRRL B-67746 or a plant-growth promoting mutant of this strain, and (b) at least one compound selected from the following groups bacteria which are employed or can be used as biological active compounds:

*Bacillus amyloliquefaciens,* strain FZB42 (DSM 231179), or *Bacillus cereus,* in particular *B. cereus* strain CNCM I-1562 or *Bacillus firmus* strain I-1582 (Accession number CNCM I-1582) or *Bacillus pumilus,* in particular strain GB34 (Accession No. ATCC 700814) and strain QST2808 (Accession No. NRRL B-30087), or *Bacillus subtilis,* in particular strain GB03 (Accession No. ATCC SD-1397), or *Bacillus subtilis* strain QST713 (Accession No. NRRL B-21661) or *Bacillus subtilis strain* OST30002 (Accession No. NRRL B-50421) *Bacillus thuringiensis,* in particular *B. thuringiensis* subspecies *israelensis* (serotype H-14), strain AM65-52 (Accession No. ATCC 1276), or *B. thuringiensis* subsp. *aizawai,* in particular strain ABTS-1857 (SD-1372), or *B. thuringiensis* subsp. *kurstaki* strain HD-1, or *B. thuringiensis* subsp. *tenebrionis* strain NB 176 (SD-*5428), Pasteuria penetrans, Pasteuria* spp. (*Rotylenchulus reniformis* nematode)-PR3 (Accession Number ATCC SD-5834), *Streptomyces microflavus* strain AQ6121 (NRRL B-50550), *Streptomyces galbus* strain AQ6047 (Acession Number NRRL 30232).

1) fungi and yeasts which are employed or can be used as biological active compounds:

*Beauveria bassiana,* in particular strain ATCC 74040, *Coniothyrium minitans,* in particular strain CON/M/91-8 (Accession No. DSM-9660), *Lecanicillium* spp., in particular strain HRO LEC 12, *Lecanicillium lecanii,* (formerly known as *Verticillium lecanii),* in particular strain KV01, *Metarhizium anisopliae,* in particular strain F52 (DSM3884/ ATCC 90448), *Metschnikowia fructicola,* in particular strain NRRL Y-30752, *Paecilomyces fumosoroseus* (now: *Isaria fumosorosea),* in particular strain IFPC 200613, or strain Apopka 97 (Accesion No. ATCC 20874), *Paecilomyces lilacinus,* in particular *P. lilacinus* strain 251 (AGAL 89/030550), *Talaromyces flavus,* in particular strain V117b, *Trichoderma atroviride,* in particular strain SC1 (Accession Number CBS *122089), Trichoderma harzianum,* in particular *T. harzianum rifai T39* (Accession Number CNCM I-952).

2) viruses which are employed or can be used as biological active compounds:

*Adoxophyes orana* (summer fruit tortrix) granulosis virus (GV), *Cydia pomonella* (codling moth) granulosis virus (GV), *Helicoverpa armigera* (cotton bollworm) nuclear polyhedrosis virus (NPV), *Spodoptera exigua* (beet armyworm) mNPV, *Spodoptera frugiperda* (fall armyworm) mNPV, *Spodoptera littoralis* (African cotton leafworm) NPV.

3) bacteria and fungi which are added as 'inoculant' to plants or plant parts or plant organs and which, by virtue of their particular properties, promote plant growth and plant health:

*Agrobacterium* spp., *Azorhizobium caulinodans, Azospirillum* spp., *Azotobacter* spp., *Bradyrhizobium* spp., *Burkholderia* spp., *in particular Burkholderia cepacia* (formerly known as *Pseudomonas cepacia*), *Gigaspora* spp., *or Gigaspora monosporum, Glomus* spp., *Laccaria spp., Lactobacillus buchneri, Paraglomus* spp., *Pisolithus tinctorus, Pseudomonas* spp., *Rhizobium* spp., *in particular Rhizobium trifolii, Rhizopogon* spp., *Scleroderma* spp., *Suillus* spp., *Streptomyces* spp.

4) plant extracts, products produced from plant extracts and products formed by microorganisms including proteins and secondary metabolites which are employed or can be used as biological active compounds:

*Allium sativum, Artemisia absinthium,* azadirachtin, BIOKEEPER® WP, *Cassia nigricans, Celastrus angulatus, Chenopodium anthelminticum,* chitin, ARMOUR-ZEN®, *Dryopteris filix-mas, Equisetum arvense,* FORTUNE AZA®, FUNGASTOP®, HEADS UP® (*Chenopodium quinoa saponin* extract), Pyrethrum/Pyrethrins, *Quassia amara,* Quercus, Quillaja, Regalia, "REQUIEM® insecticide", rotenone, ryania/ryanodine, *Symphytum officinale, Tanacetum vulgare,* thymol, TRIACT® 70, TRICON®, *Tropaeulum majus, Urtica dioica,* Veratrin, *Viscum album,* Brassicaceae extract, in particular oilseed rape powder or mustard powder, as well as bioinsecticidal/acaricidal active substances obtained from olive oil, in particular unsaturated fatty/carboxylic acids having carbon chain lengths $C_{16}$-$C_{20}$ as active ingredients, such as, for example, contained in the product with the trade name FLIPPER®.

Safener as Mixing Partner (b)

A compound (a) can be combined with (b) safeners such as, for example, benoxacor, cloquintocet (-mexyl), cyometrinil, cyprosulfamide, dichlormid, fenchlorazole (-ethyl), fenclorim, flurazole, fluxofenim, furilazole, isoxadifen (-ethyl), mefenpyr (-diethyl), naphthalic anhydride, oxabetrinil, 2-methoxy-N-({4-[(methylcarbamoyl)amino]phenyl}sulphonyl)benzamide (CAS 129531-12-0), 4-(dichloroacetyl)-1-oxa-4-azaspiro[4.5]decane (CAS 71526-07-3), 2,2,5-trimethyl-3-(dichloroacetyl)-1,3-oxazolidine (CAS 52836-31-4).

**Ratio of *Bacillus* sp. (CFU) to Chemical Fungicide or Chemical Pesticide**

The compound combinations according to the invention may comprise 1, 2 or even more compounds (b). Preferably, the compound combinations according to the invention comprise 1 or 2 compound(s) (b). In one embodiment, all compounds (b) are fungicides. However, in case two or more compound(s) (b) are present, those compounds may be selected from different groups (1) to (15). For example, if one compound (b) is selected from group (1), the further compound(s) (b) may be selected from groups (2) to (15).

According to the invention, the expression "combination" stands for the various combinations of (a) and (b), for example in a single "ready-mix" form, in a combined spray mixture composed from separate formulations of the single active compounds, such as a "tank-mix", and in a combined use of the single active ingredients when applied in a sequential manner, i.e., one after the other within a reasonably short period, such as a few hours or days. Preferably the order of applying the compounds (a) and (b) is not essential for working the present invention.

If more than one, e.g., 2 or 3, compounds (b) are present in a combination according ot the invention, the weight ratio refers to the total amount of compound (b), i.e., to the sum of the amount of each compound (b) present in the combination. This applies *mutatis mutandis* if more than one, e.g., 2 or 3, compounds (a) are present. Compounds (b) can be of the same type, e.g., two or more fungicides, or combination of different types, e.g., two or more fungicides, or combination of different types, e.g., a fungicide and a biological compound or a pesticide.

If more than one, e.g., 2 or 3, compounds (b) are present in the combinations according to the invention the individual compounds (b) can be present in a broad range of effective weight ratio. If for example 2 compounds (b) are present, which are in the following referred to as compounds (B1) and (B2) the effective weight ratio of B1:B2, can vary for example in a range of 100:1 to 1:100, preferably in a weight ratio of 50:1 to 1:50, most preferably in a weight ratio of 20:1 to 1:20. Further ratios of B1:B2 which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 50:1 to 1:50, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2.

Further ratios of B1:B2 which can be used according to the present invention are: 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 50:1 to 1:1, 45:1 to 1:1, 40:1 to 1:1, 35:1 to 1:1, 30:1 to 1:1, 25:1 to 1:1, 20:1 to 1:1, 15:1 to 1:1, 10:1 to 1:1, 5:1 to 1:1, 4:1 to 1:1, 3:1 to 1:1, 2:1 to 1:1.

Ratios other than weight ratios may be provided for active compounds that are not chemical fungicides or chemical pesticides, such as microbial active compounds. Colony forming unit (CFU) is measure of viable microbial cells, in particular fungal and bacterial cells. The ratio of *Bacillus* sp. strain to a chemical fungicide or pesticide is given in bacteria CFU:g chemical fungicide or pesticide (CFU:g). Typically, the ratio of a *Bacillus* sp. strain as described herein to a chemical fungicide or pesticide is from $10^{18}$ CFU:1g to $10^{4}$ CFU:1g. In one embodiment, the ratio of a *Bacillus* sp. strain to a chemical fungicide or pesticide is from $10^{17}$ CFU:1g to $10^{5}$ CFU:1g. In another embodiment, a *Bacillus* sp. strain as described herein to a chemical fungicide or pesticide is from $10^{15}$ CFU:1g to $10^{8}$ CFU:1g. In yet another embodiment, a *Bacillus* sp. strain as described herein to a chemical fungicide or pesticide is from $10^{13}$ CFU:1g to $10^{9}$ CFU:1 g. In yet another embodiment, a *Bacillus* sp. strain as described herein to a chemical fungicide or pesticide is from $10^{13}$CFU:1g to $10^{10}$CFU:1g. In one embodiment, these ratios refer especially to ratios between *Bacillus* sp. strain is NRRL B-67746 and a chemical fungicide or pesticide.

**Ratio of *Bacillus* sp. (CFU) to Biological Active Compound (CFU)**

In case a biological active compound (b) is a bacteria or fungi, the amount of such a biological active compound can be measured in CFU. The ratio of *Bacillus* sp. strain to a biological active compound is typically in a range from 1000:1 CFU compound(a) : CFU compound (b) to 1:1000 CFU compound(a) : CFU compound (b). In another embodiment, the ratio is from 100:1 CFU compound(a) : CFU compound (b) to 1:100 CFU compound(a) : CFU compound (b). In yet another embodiment, the ratio is from 25:1 to 1:25 such as from 10:1 to 1:10. In yet another embodiment, the ratio is from 4:1 to 1:4. In one embodiment, these ratios refer especially to ratios between *Bacillus* spp. strain NRRL B-67746 and a bacteria or fungi.

**Ratio of *Bacillus* sp. (CFU) to Biological Active Compound (PFU)**

In case a biological active compound is a virus, the amount of such a biological active compound can be measured in PFU (plaque forming units). The ratio of *Bacillus* sp. strain to a biological active compound is typically in a range from 1000:1 CFU compound(a) : PFU compound (b) to 1:1000 CFU compound(a) : PFU compound (b). In another embodiment, the ratio is from 100:1 CFU compound(a) : PFU compound (b) to 1:100 CFU compound(a) : PFU compound (b). In yet another embodiment, the ratio is from 25:1 to 1:25 such as from 10:1 to 1:10. In yet another embodiment, the ratio is from 4:1 to 1:4. In one embodiment, these ratios refer especially to ratios between *Bacillus* spp. strain NRRL B-67746 and a virus.

In another embodiment an active compound combination comprises (a) *Bacillus* spp. strain NRRL B-67746, and (b) an active compound selected from the group consisting of metalaxyl, prothioconazole, fluoxastrobin, clothianidin, *Bacilus firmus* I-1582, imidacloprid, *Bacillus megaterium* NRRL B-67357 and an LCO.

In yet another embodiment, an active compound combination comprises *Bacillus* spp. strain NRRL B-67746 and metalaxyl.

In yet another embodiment, an active compound combination comprises *Bacillus* spp. strain NRRL B-67746 and prothioconazole.

In yet another embodiment, an active compound combination comprises *Bacillus* spp. strain NRRL B-67746 and fluoxastrobin.

In yet another embodiment, an active compound combination comprises *Bacillus* spp. strain NRRL B-67746 and clothianidin.

In yet another embodiment, an active compound combination comprises *Bacillus* spp. strain NRRL B-67746 and *Bacilus firmus* I-1582.

In yet another embodiment, an active compound combination comprises *Bacillus* spp. strain NRRL B-67746 and imidacloprid.

In yet another embodiment, an active compound combination comprises *Bacillus* spp. strain NRRL B-67746 and *Bacillus megaterium* NRRL B-67357.

In yet another embodiment, an active compound combination comprises *Bacillus* spp. strain NRRL B-67746 and an LCO.

In another embodiment an active compound combination comprises (a) *Bacillus* spp. strain NRRL B-67746 and (b) an active compound selected from the group consisting of thiodicarb, imidacloprid, carbendazim, thiram and *Bradyrhizobium japonicum.*

In yet another embodiment, an active compound combination comprises *Bacillus* spp. strain NRRL B-67746 and thiodicarb and imidacloprid.

In yet another embodiment, an active compound combination comprises *Bacillus* spp. strain NRRL B-67746 and carbendazim and thiram.

In yet another embodiment, an active compound combination comprises *Bacillus* spp. strain NRRL B-67746 and *Bradyrhizobium japonicum.*

Certain active compound combinations presented above may have a synergistic effect at certain ratios of compound (a) to compound (b). A synergistic effect of active ingredients is present when the activity of the active ingredient combinations exceeds the total of the activities of the active ingredients when applied individually. The expected activity for a given combination of two active ingredients can be calculated as follows (cf. Colby, S.R., "Calculating Synergistic and Antagonistic Responses of Herbicide Combinations," Weeds 1967, 15, 20-22):

If

X is the efficacy when active ingredient A is applied at an application rate of m ppm (or g/ha),

Y is the efficacy when active ingredient B is applied at an application rate of n ppm (or g/ha),

E is the efficacy when the active ingredients A and B are applied at application rates of m and n ppm (or g/ha), respectively, and

then

$$E = X + Y - \frac{X \cdot Y}{100}$$

If the actual activity exceeds the calculated value, then the activity of the combination is superadditive, i.e., a synergistic effect exists. In this case, the efficacy which was actually observed must be greater than the value for the expected efficacy (E) calculated from the above-mentioned formula.

For instance, the formula and analysis can be applied to an evaluation of plant growth promotion. Such an assay is evaluated several days after the applications to plants. 100% means plant weight which corresponds to that of the untreated control plant. Efficacy means in this case the additional % of plant weight in comparison to that of the untreated control. For example, a treatment that resulted in plant weights that were 120% compared to the untreated control plant would have an efficacy of 20%. If the plant growth promotion effect for the combination (i.e., the observed efficacy for % shoot weights of plants treated with the combination) exceeds the calculated value, then the activity of the combination is superadditive, i.e., a synergistic effect exists.

The formula and analysis can also be used to evaluate synergy in disease control or pest control assays. The degree of efficacy expressed in % is denoted. 0 % means an efficacy which corresponds to that of the control while an efficacy of 100 % means that no disease is observed.

If the actual insecticidal or fungicidal activity exceeds the calculated value, then the activity of the combination is superadditive, i.e., a synergistic effect exists. In this case, the efficacy which is actually observed must be greater than the value for the expected efficacy (E) calculated from the above-mentioned formula.

A further way of demonstrating a synergistic effect is the method of Tammes (cf. "Isoboles, A Graphic Representation of Synergism in Pesticides," in Neth. J. Plant Path., 1964, 70, 73-80).

All plants and plant parts can be treated in accordance with the invention. In the present context, plants are understood as meaning all plants and plant populations, such as desired and undesired wild plants or crop plants (including naturally occurring crop plants). Crop plants can be plants which can be obtained by traditional breeding and optimization methods or by biotechnological and recombinant methods, or combinations of these methods, including the transgenic plants and including the plant varieties capable or not of being protected by Plant Breeders' Rights. Plant parts are understood as meaning all aerial and subterranean parts and organs of the plants, such as shoot, leaf, flower and root, examples which may be mentioned being leaves, needles, stalks, stems, flowers, fruiting bodies, fruits and seeds, and also roots, tubers and rhizomes. The plant parts also include crop material and vegetative and generative propagation material, for example cuttings, tubers, rhizomes, slips and seeds.

As has already been mentioned above, all plants and their parts may be treated in accordance with the invention. In a preferred embodiment, plant species and plant varieties, and their parts, which grow wild or which are obtained by traditional biological breeding methods such as hybridization or protoplast fusion are treated. In a further preferred embodiment, transgenic plants and plant varieties which have been obtained by recombinant methods, if appropriate in combination with traditional methods (genetically modified organisms), and their parts are treated. The term "parts" or "parts of plants" or "plant parts" has been explained hereinabove. Plants of the plant varieties which are in each case commercially available or in use are especially preferably treated in accordance with the invention. Plant varieties are understood as meaning plants with novel traits which have been bred both by traditional breeding, by mutagenesis or by recombinant DNA techniques. They may take the form of varieties, races, biotypes and genotypes.

The treatment of the plants and plant parts with the compositions according to the invention is carried out directly or by acting on the environment, habitat or storage space using customary treatment methods, for example by dipping, spraying, atomizing, misting, evaporating, dusting, fogging, scattering, foaming, painting on, spreading, injecting, drenching, trickle irrigation and, in the case of propagation material, in particular in the case of seed, furthermore by the dry seed treatment method, the wet seed treatment method, the slurry treatment method, by encrusting, by coating with one or more coats and the like. It is furthermore possible to apply the active substances by the ultra-low volume method or to inject the active substance preparation or the active substance itself into the soil.

Preferred plants are those from the group of the useful plants, ornamentals, turfs, generally used trees which are employed as ornamentals in the public and domestic sectors, and forestry trees. Forestry trees comprise trees for the production of timber, cellulose, paper and products made from parts of the trees.

The term "useful plants" as used in the present context refers to crop plants which are employed as plants for obtaining foodstuffs, feedstuffs, ornamentals, fuels or for industrial purposes.

The useful plants which can be treated and/or improved with the compositions and methods of the present invention include for example the following types of plants: turf, vines, cereals, for example wheat, barley, rye, triticale, oats, rice, maize and millet/sorghum; beet, for example sugar beet and fodder beet; fruits, for example pome fruit, stone fruit and soft fruit, for example apples, pears, plums, peaches, almonds, cherries and berries, for example strawberries, raspberries, blackberries; legumes, for example beans, lentils, peas and soybeans; oil crops, for example oilseed rape, mustard, poppies, olives, sunflowers, coconuts, oilpalm, castor oil plants, cacao and peanuts; cucurbits, for example pumpkin/squash, cucumbers and melons; fibre plants, for example cotton, flax, hemp and jute; citrus fruit, for example oranges, lemons, grapefruit and tangerines; vegetables, for example spinach, lettuce, asparagus, cabbage species, carrots, *Allium* spp., e.g., onions, garlic, tomatoes, potatoes and bell peppers; Lauraceae, for example avocado, Cinnamomum, camphor, or else plants such as tobacco, tree nuts, coffee, cooca, aubergine, sugar cane, tea, pepper, grapevines, hops, bananas, forages like alfalfa, clover, fodder sorghum, latex plants and ornamentals, for example flowers, shrubs, deciduous trees and coniferous trees.

The following plants are considered to be particularly suitable target crops for applying compositions and methods of the present invention: cotton, aubergine, turf, pome fruit, stone fruit, soft fruit, maize, wheat, barley, cucumber, tobacco, vines, rice, cereals, pear, beans, soybeans, oilseed rape, tomato, bell pepper, melons, cabbage, potato and apple.

The present invention can also be applied to any turf grasses, including cool-season turf grasses and warm-season turf grasses. Examples of cold-season turf grasses are bluegrasses (*Poa* spp.), such as Kentucky bluegrass (*Poa pratensis* L.), rough bluegrass (*Poa trivialis* L.), Canada bluegrass (*Poa compressa* L.), annual bluegrass (*Poa annua* L.), upland bluegrass (*Poa glaucantha Gaudin*), wood bluegrass (*Poa nemoralis* L.) and bulbous bluegrass (*Poa bulbosa* L.); bentgrasses (*Agrostis* spp.) such as creeping bentgrass (*Agrostis palustris* Huds.), colonial bentgrass (*Agrostis tenuis* Sibth.), velvet bentgrass (*Agrostis canina* L.), South German mixed bentgrass (*Agrostis* spp. including *Agrostis tenuis* Sibth., *Agrostis canina* L., and *Agrostis palustris* Huds.), and redtop (*Agrostis alba* L.);

fescues (*Festuca* spp.), such as red fescue (*Festuca rubra* L. spp. *rubra*), creeping fescue (*Festuca rubra* L.), chewings fescue (*Festuca rubra commutata* Gaud.), sheep fescue (*Festuca ovina* L.), hard fescue (*Festuca longifolia* Thuill.), hair fescue (*Festucu capillata* Lam.), tall fescue (*Festuca arundinacea* Schreb.) and meadow fescue (*Festuca elanor L.);*

ryegrasses (*Lolium* spp.), such as annual ryegrass (*Lolium multiflorum* Lam.), perennial ryegrass (*Lolium perenne* L.) and Italian ryegrass (*Lolium multiflorum* Lam.);

and wheatgrasses (*Agropyron* spp.), such as fairway wheatgrass (*Agropyron cristatum* (L.) Gaertn.), crested wheatgrass (*Agropyron desertorum* (Fisch.) Schult.) and western wheatgrass (*Agropyron smithii* Rydb.)

Examples of further cool-season turf grasses are beachgrass (*Ammophila breviligulata* Fern.), smooth bromegrass (*Bromus inermis* Leyss.), cattails such as timothy (*Phleum pratense* L.), sand cattail (*Phleum subulatum* L.), orchardgrass (*Dactylis glomerata* L.), weeping alkaligrass (*Puccinellia distans* (L.) Parl.) and crested dog's-tail (*Cynosurus cristatus L.*)

Examples of warm-season turf grasses are Bermuda grass (*Cynodon spp.* L. C. Rich), zoysia grass (*Zoysia* spp. Willd.), St. Augustine grass (*Stenotaphrum secundatum* Walt Kuntze), centipede grass (*Eremochloa ophiuroides* Munro Hack.), carpetgrass (*Axonopus affinis* Chase), Bahia grass (*Paspalum notatum* Flugge), Kikuyu grass (*Pennisetum clandestinum* Hochst. ex Chiov.), buffalo grass (*Buchloe dactyloids* (Nutt.) Engelm.), blue grama (*Bouteloua gracilis* (H.B.K.) Lag. ex Griffiths), seashore paspalum (*Paspalum vaginatum* Swartz) and sideoats grama (*Bouteloua curtipendula* (Michx. Torr.) Cool-season turf grasses are generally preferred for the use according to the invention. Especially preferred are bluegrass, benchgrass and redtop, fescues and ryegrasses. Bentgrass is especially preferred.

In certain aspects, the compositions of the present invention are applied to seed at about $1 \times 10^5$ to about $1 \times 10^8$ colony forming units (CFU) of plant growth-promoting *Bacillus* spp. NRRL B-67746 or a plant growth-promoting mutant strain derived therefrom per seed, depending on seed size. For example, for a corn seed, the application rate is about $1 \times 10^6$ CFU/seed to about $1 \times 10^7$ CFU/seed, and for soy the application rate is about $1 \times 10^5$ CFU/seed to about $2 \times 10^6$ CFU/seed.

When used as a soil treatment, the compositions and spore-forming bacterial cells of the present invention can be applied as a soil surface drench, shanked-in, injected and/or applied in-furrow or by mixture with irrigation water. The rate of application for drench soil treatments, which may be applied at planting, during or after seeding, or after transplanting and at any stage of plant growth is about $1 \times 10^{11}$ to about $1 \times 10^{16}$ colony forming units (CFU) of plant growth-promoting *Bacillus* spp. NRRL B-67746 or a plant growth-promoting mutant strain derived therefrom per hectare. In other aspects, the compositions of the present invention are applied at about $1 \times 10^{14}$ to about $1 \times 10^{15}$ colony forming units (CFU) of plant growth-promoting *Bacillus* spp. NRRL B-67746 or a plant growth-promoting mutant strain derived therefrom per hectare. In yet other aspects, the compositions of the present invention are applied at about $1 \times 10^{14}$ to about $5 \times 10^{14}$ colony forming units (CFU) of plant growth-promoting *Bacillus* spp. NRRL B-67746 or a plant growth-promoting mutant strain derived therefrom per hectare.

The application rate for foliar applications, such as applications to turf, are the same as those disclosed above for soil treatment.

**DEPOSIT INFORMATION**

A sample of the *Bacillus* spp. strain of the invention has been deposited with the Agricultural Research Service Culture Collection located at the National Center for Agricultural Utilization Research, Agricultural Research Service, U.S. Department of Agriculture, 1815 North University Street, Peoria, Illinois 61604, U.S.A., under the Budapest Treaty on February 14, 2019, and has been assigned the following depository designation: NRRL B-67746.

All strains described herein and having an accession number with the NRRL prefix have been deposited with the above-described respective depositary institution in accordance with the Budapest Treaty on the International Recognition of the Deposit of Microorganisms for the Purposes of Patent Procedure.

These strains have been deposited under conditions that assure that access to the culture will be available during the pendency of this patent application to one determined by the Commissioner of Patents and Trademarks to be entitled thereto under 37 C.F.R. § 1.14 and 35 U.S.C. §122. The deposit is available as required by foreign patent laws in countries wherein counterparts of the subject application or its progeny are filed. However, it should be understood that the availability of a deposit does not constitute a license to practice the subject invention in derogation of patent rights granted by governmental action.

The following examples are given for purely illustrative purposes of the present invention.

**EXAMPLES**

**Example 1: Screening of *Bacillus* spp. Strains in a Vigor Index Platform Assay - Corn**

The seed quality component responsible for performance differs among high germinating seed lots and is referred to as seed vigor or seedling vigor. Seed vigor may be affected by seed treatments. To determine the effect of NRRL B-67746 on seed vigor, maize seedling vigor tests were carried out with a paper towel method using a modified protocol from the International Seed Testing Association ("ISTA"). Standard corn hybrid was used in these tests with a 100% warm germination percentage. The seed lot showing the higher seed vigor index is considered to be more vigorous (Abdul-Baki and Anderson, 1973). Two seedling vigor tests were conducted.

NRRL B-67746 was compared with other *Bacillus* strains in the *Bacillus amyloliquefaciens* operational group as a seed treatment. All strains that were not from commercial products were cultured under the same conditions in a soy-based media. Specifically, the strains were grown at 30°C for 5 days until sporulation was complete using shake flasks and a soy-based media.

In a first experiment, whole broth from NRRL B-67746 and from another *Bacillus* strain in the *Bacillus amyloliquefaciens* operational group (Strain 1) was applied to the maize seeds at rates of $1 \times 10^6$ or $1 \times 10^7$ CFU per seed. For comparison, seeds were also treated with a commercial biological product based on a *Bacillus* strain in the *Bacillus amyloliquefaciens* operational group (the "Commercial Biological Product"), also at a rate of $1 \times 10^6$ or $1 \times 10^7$ CFU per seed. Seeds treated with water were used as an untreated control. In this experiment, seedling vigor index was highest for NRRL B-67746 at the rate of $1 \times 10^6$ CFU per seed, compared to the untreated control and the other *Bacillus* strain in the *Bacillus amyloliquefaciens* operational group. At this rate, seedling vigor index for NRRL B-67746 was similar to the Commercial Biological Product. At the rate of $1 \times 10^7$ CFU per seed, NRRL B-67746 showed the highest seedling vigor index as compared to all other treatments, which was 70% higher than the untreated control. See **Table 1** for results.

**Table 1 - Seed Treatments**

| Treatments | Seedling Vigor Index | % Increase Over Control |
|---|---|---|
| Untreated Control (water "treatment" only) | 12840.83 | - |
| Commercial Biological Product ($1 \times 10^6$ CFU/seed) | 14490.62 | 13.0 |
| Commercial Biological Product ($1 \times 10^7$ CFU/seed) | 15280.97 | 19.0 |
| NRRL B-67746 ($1 \times 10^6$ CFU/seed) | 14913.30 | 16.0 |

(continued)

| Treatments | Seedling Vigor Index | % Increase Over Control |
|---|---|---|
| NRRL B-67746 (1 × 10$^7$ CFU/seed) | 21807.52 | 70.0 |
| Strain 1 (1 × 10$^6$ CFU/seed) | 9511.14 | -25.0 |
| Strain 1 (1 × 10$^7$ CFU/seed) | 11003.87 | -14.0 |

In a second experiment, seeds were treated with (i) a standard chemical coating consisting of a fungicide and an insecticide (referred to in this example as the chemical base) or (ii) with the chemical base and either NRRL B-67746 or the Commercial Biological Product, each applied at a rate of 1 × 10$^6$ CFU per seed.

Five seeds for each treatment with ten replications each were planted on an autoclaved germination paper (Anchor Company, Minnesota, U.S.A.) in a completely randomized design and incubated in a growth chamber at 28°C. After 7 days, the number of germinated seeds was counted and the percent of the total seeds in each group that germinated was calculated. Seedling length was measured by taking the shoot and root lengths per plant. The seedling vigor index was calculated with the following formula:

$$\text{germination } (\%) \times \text{seedling length (cm)}.$$

The Commercial Biological Product and NRRL B-67746 were compared to a commercial chemical seed treatment. In this experiment, as in the last, NRRL B-67746 outperformed both the Commercial Biological Product and the control for seedling vigor index. See results in **Table 2,** below.

**Table 2 - Seed Treatment with Chemical Base**

| Treatments | Seedling Vigor Index | % Increase Over Control |
|---|---|---|
| Control (Chemical base only) | 30842.74 | - |
| Commercial Biological Product | 33094.81 | 7.0 |
| NRRL B-67746 | 36097.73 | 17 |

**Example 2: Screening of *Bacillus* spp. Strains for Early Vigor - Soy and Corn**

In a greenhouse experiment, corn and soybean seeds were treated with NRRL B-67746 or other *Bacillus* strains from the *Bacillus amyloliquefaciens* operational group in order to assess their effect on plant growth promotion. The treatments were an untreated control and four different strains, including NRRL B-67746, Strain 1, another strain from the *Bacillus amyloliquefaciens* operations group ("Strain 2") and the Commercial Biological Product. Whole broth cultures of NRRL B-67746, Strain 1 and Strain 2 were prepared as described above in Example 1. Each was applied to seeds at the rate of 1 × 10$^6$ CFU/seed. The untreated control (UTC) were seeds "treated" with sterile deionized water.

Seeds were planted in a sandy loam soil, in 2.5" square pots with 12 reps per variety. A randomized block design was used. Throughout the course of the experiment, plants were watered from above as needed and fertilized at 7 and 14 days with 20-20-20 fertilizer at 1 g/L, 10 mL/pot. Pots were removed from the pot trays and placed in the randomized design directly on the bench in the greenhouse chamber. The greenhouse chamber was set to 75-80°F with a 14/10 hour photoperiod. 21 days after planting, plant growth promotion was assessed by cutting the shoots and measuring leaf area with a LI-3000C portable leaf area meter (LI-COR® Biosciences, Lincoln, Nebraska, U.S.A.) The average leaf areas of soybean and corn treated with NRRL B-67746 were significantly greater than that of the untreated control seeds or seeds treated with Strain 1 or Strain 2. The Commercial Biological Product exhibited similar leaf area in corn and a slightly higher leaf area than NRRL B-67746 in soybean. Results are shown in **Table 3,** below.

**Table 3 - Plant Growth Promotion Results**

| Treatment | Crop-Corn (Total Leaf Surface Area cm$^2$/plant) n=12 | Crop-Soy (Total Leaf Surface Area cm$^2$/plant) n=12 |
|---|---|---|
| Untreated Control | 45.07 | 48.03 |
| Commercial Biological Product | 50.37 | 58.98 |

(continued)

| Treatment | Crop-Corn (Total Leaf Surface Area cm²/plant) n=12 | Crop-Soy (Total Leaf Surface Area cm²/plant) n=12 |
|---|---|---|
| NRRL B-67746 | 50.45 | 55.07 |
| Strain 1 | 43.53 | 45.95 |
| Strain 2 | 42.02 | 43.25 |

**Example 3: Nodule Mass and Plant Growth after Treatment with *Bradyrhizobium* and NRRL B-67746**

Biological nitrogen fixation by soybean symbiont *Bradyrhizobium japonicum* is an important biofertilizer input for soybeans in North and South America. Therefore, it is important to assess if an added biological treatment has an impact on the nodulation efficiency provided by *Bradyrhizobium* assessed via nodule mass and general plant growth. In another experiment, soybean seeds were treated with a chemical base consisting of an insecticide and a fungicide that is typical for North America (NA) or for South America (SA) applied in combination with a commercially available *Bradyrhizobium* inoculant capable of biological nitrogen fixation. Plants arising from this treatment were compared to plants from seed treated with the same chemical base, *Bradyrhizobium* and a whole broth culture of NRRL B-67746, grown as described in **Example 1,** above. The *Bradyrhizobium* inoculant and the B-67746 were each applied at a rate of $1 \times 10^6$ CFU/seed. After 28 days of growth, various plant characteristics were assessed. The plants treated with NRRL B-*67746, Bradyrhizobium* and the chemical base showed increased plant height, leaf area, and average root surface area compared to those treated with the chemical base and *Bradyrhizobium* only.

**Table 4 - Nodule Mass and Plant Growth Characteristics after Treatment with a Base Treatment +/- NRRL B-67746**

| Treatment | Fresh Mass of Nodules (g/plant) | % Increase Over Control | Plant Height, 28 Days After Planting (cm) | % Increase Over Control | Average Leaf Surface Area (cm²/plant) | % Increase Over Control | Average Root Surface Area (cm²/plant) | % Increase Over Control |
|---|---|---|---|---|---|---|---|---|
| Chemical Base (NA) + *Bradyrhizobium* | 0.10 | | 9.95 | | 72 | | 47.66 | |
| Chemical Base (NA) + *Bradyrhizobium* + B-67746 | 0.11 | 10% | 10.2 | 3% | 74 | 3% | 45.45 | -5% |
| Chemical Base (SA) + *Bradyrhizobium* | 0.20 | | 14.4 | | 72 | | 135 | |
| Chemical Base (SA) + *Bradyrhizobium* + B-67746 | 0.22 | 10% | 17 | 18% | 111 | 54% | 135 | 0% |

**Example 4 qPCR Studies to Identify Presence of NRRL- B-67746 in Soybean Nodules**

Soybean plants were treated with $1 \times 10^6$ CFU/mL of a commercially available *Bradyrhizobium* inoculant, alone or in combination with NRRL B-67746 at $1 \times 10^6$ CFU/mL. Soy nodules were randomly collected from the plants inoculated after four weeks. The collected nodules were surface sterilized with 1% bleach solution for 5 minutes, followed with 70% ethanol for one minute and then rinsed with water. The nodules were passed over flame for sterilization and then were rinsed three times using sterilized distilled water. The nodules were vortexed briefly in 100 μL ddH$_2$O and 100 μL water was plated to check for microbial growth or contamination. The presence of NRRL B-67746 inside soybean nodules was determined by crushing nodules separately in 1.5 mL sterilized microtubes, followed by DNA extraction and qPCR using primer sets designed to be specific for NRRL B-67746 and *Bradyrhizobium.* **Table 5** shows detection of NRRL B-67746 in several separately tested nodules.

**Table 5 - Detection of NRRL B-67746 in Nodules**

| Treatment | Contamination (Y/N) | Nanodrop Concentration (ng/μL) | *Bradyrhizobium* Detection (Y/N) | NRRL B-67746 Detection (Y/N) |
|---|---|---|---|---|
| NRRL B-67746 | N | 35.57 | Y | Y |
| NRRL B-67746 | N | 27.88 | Y | Y |
| NRRL B-67746 | N | 28.76 | Y | Y |
| NRRL B-67746 | N | 2.983 | Y | Below Cutoff |
| NRRL B-67746 | N | 79.65 | Y | Y |
| NRRL B-67746 | N | 2.629 | Y | Below Cutoff |
| Control | N | 235.8 | Y | N |
| Control | N | 304 | Y | N |
| Control | N | 294.3 | Y | N |

**Example 5: Improvement of Nitrogen Fixation and Assimilation Efficiency in Soy Plants**

Soybean seeds were treated with NRRL B-67746 and a commercially available *Bradyrhizobium japonicum* inoculant and tested to determine whether such treatment improved nitrogen fixation and assimilation efficiency in soybean plants. Whole broth cultures of NRRL B-67746 were grown by transferring one colony from a plate to 50 mL tryptic soy broth ("TSB") in a 250 mL baffled flask. The inoculated flask was incubated at 30°C and 220 RPM for 24 hours. Then, 1 mL of this seed flask was transferred to 50 mL of TSB Schaeffer media in a 250 mL baffled flask and incubated at 30°C and 220 RPM for 72 hours. A small portion of this sample was assessed to determine colony forming units. Soybean seeds were treated with $1 \times 10^6$ CFU of whole broth culture of B-67746 per seed. A 1:100 dilution of the culture of the *Bradyrhizobium* strain was applied via drench directly onto the seed during planting. Control seeds were treated with the *Bradyrhizobium* drench only.

Nitrogenase Method

25 days after planting, roots of two-week old soybean seedlings were harvested by cutting the entire root system (above the primary root). Roots were washed with water and tapped dry on a paper towel. Roots were placed in a 50 mL falcon tube and covered with a rubber septum. 5 mL acetylene was injected into the tube. Samples were incubated for 1 h before gas chromatograph ("GC") injection. 10 μL of the head space gas in the tube was injected into the GC. Ethylene production was monitored at 0 h, 1 h and 3 h incubation with acetylene. Results are provided in **Table 6,** below. Seedings treated with NRRL B-67746 showed significantly higher nitrogenase activity compard to the *Bradyrhizobium* base treatment.

**Table 6 - Nitrogenase Activity for NRRL B-67746 Treated Seeds**

| | Soybean Variety | Average | SE |
|---|---|---|---|
| B-67746 + *Bradyrhizobium* | Variety 1 | 237.1825927 | 109.4159 |
| *Bradyrhizobium* only | Variety 1 | 87.15976517 | 32.6298 |
| B-67746 + *Bradyrhizobium* | Variety 2 | 77.54834969 | 34.57229 |
| *Bradyrhizobium* only | Variety 2 | 46.42325835 | 1.728181 |

Ureides Method

*Extraction*

Fresh six-week old soybean plants were harvested and nodule, root, stem and petiole were separated. Each plant part was grinded in a mortar pestle using liquid nitrogen. 500 mg of freshly grinded samples were mixed in 200 $\mu$L of 0.5 N NaOH and 300 $\mu$L of water. Samples were heated at 100°C for 8 minutes. After cooling, 200 mL of 0.65 N HCl was added and the mixture was heated for additional 8 minutes at 100°C. After cooling mixture was centrifuged for 15 minutes at 17000 g.

*Color Development*

100 mL of supernatant and 500 mL water was mixed with 100 mL phenylhydrazine and the mixture was allowed to stand for 30 minutes or longer at room temperature. The tubes were cooled to 0°C in an ice-water bath, and 500 mL concentrated HCl precooled to -20°C and 100 mL ferricyanide solution were added. The tubes were placed at room temperature and the color was read at 535 nm after 15 minutes. Results are shown in **FIG. 1.** Soybean seedlings treated with NRRL B-67746 had significantly higher ureides content in various plant parts when compared to base treatments.

**Example 6: Field Trials in Corn**

Over the course of three years, field trials were conducted in corn to compare yield improvement capabilities of several *Bacillus* strains in the *Bacillus amyloliquefaciens* operational group. All non-commercial strains were cultured at 30°C for 5 days until sporulation was complete using shake flasks and a soy-based media.

The resulting whole broths were applied to corn seed along with a chemical base treatment or a chemical and biological base treatment, as applicable per trial. In Year 3, a preservative was added to the whole broth prior to its application to the corn seed. The whole broths were applied to the seeds at the following rates: 1-2 $\times$ 10^6 CFU/seed for Years 1 and 2 and 2 $\times$ 10^6 CFU/seed for Year 3. Treated corn seeds were planted and grown during the normal season until harvest.

In each trial, the seeds treated with the strains set forth in the Tables below were compared to a treatment that had all the same components except the strain. Typically, there were four plots per trial, but in a few trials in Year 2 there were three plots per trial. RCBD (randomized complete block design) was used for all trials. Data from outlier plots was removed from trial data, such as plots with extremely low yield or extreme outliers based on the yield range per trial. **Table 7,** below, shows how NRRL-B-67746 performed compared to other strains of the same operational group when applied on top of a chemical base. Results are based in part on modeling of the raw data. Model estimates accounted for spatial variation and stochasticity within fields and were produced by mixed linear models with restricted maximum likelihood. This is a standard method used in many studies and produces more accurate results than solely summarizing raw data. Some raw data is also presented to show differences between raw data and data generated through modeling. For example, the raw data shows a large yield gain for Strain 5, but the modeled data is more predictive, as it takes into account the low trial number for Strain 5 and in-field variations. While the yield gains for B-67746 are numerically different from the other treatments, the results are not statistically significant. However, this is quite common when comparing multiple trials over multiple years, even with modeling, due to differences within fields and between trials and years. Therefore, **Table 7** also shows "Consistency" among trials, which is the rate at which the treatment gave an increase in yield compared to the control (chemical base or biological reference-chemical base). "Consistency 0.5" and "Consistency 2.5" are the rates at which the treatment gave an increase in yield of 0.5% or 2.5%, respectively, compared to the control. This is a common way for agronomists to analyze efficacy of various treatments. The "Predicted Consistency" is the modeled version of this raw data. Confidence intervals ("CI") are also provided in **Tables 7** and **8** for the predicted consistency. The lower CI95 provides that the yield gain for new trials would not be below this rate, with 95% confidence. The upper CI95 provides that the yield gain in new trials would not be above this rate, with 95% confidence.

**Table 7**

|  | Strain 2 | B-67746 | Strain 1 | Strain 3 | Chemical Base | Strain 4 | Commercial Biological Product | Strain 5 | Strain 6 |
|---|---|---|---|---|---|---|---|---|---|
| Number of Trials | 63 | 58 | 50 | 29 | 68 | 21 | 21 | 10 | 10 |
| Consistency 0 (%) | 63.5 | 74.1 | 64 | 58.6 | 0 | 52.4 | 57.1 | 80 | 80 |
| Consistency 0.5 (%) | 41.3 | 55.2 | 36 | 31 | 0 | 23.8 | 23.8 | 20 | 20 |
| Consistency 2.5 (%) | 23.8 | 24.1 | 12 | 10.3 | 0 | 4.8 | 9.5 | 0 | 0.2 |

(continued)

|  | Strain 2 | B-67746 | Strain 1 | Strain 3 | Chemical Base | Strain 4 | Commercial Biological Product | Strain 5 | Strain 6 |
|---|---|---|---|---|---|---|---|---|---|
| Predicted Consistency 0 (%) | 62.5 | 71.6 | 63.8 | 60.5 | N/A | 58.4 | 66.4 | 63.2 | 66.4 |
| Lower 95% CI for Predicted Consistency 0 (%) | 52.9 | 62.3 | 53.1 | 46.1 | N/A | 41.5 | 49.8 | 38.9 | 42.2 |
| Upper 95% CI for Predicted Consistency 0 (%) | 71.4 | 79.6 | 73.6 | 73.6 | N/A | 73.9 | 80.2 | 83.1 | 85.2 |
| Yield Gain Mean (Raw) | 1.239 | 2.635 | -0.692 | 1.327 | 0 | -0.051 | 2.159 | 11.597 | 3.836 |
| Yield Gain Standard Error (Raw) | 9.016 | 9.633 | 9.634 | 9.313 | 8.739 | 9.177 | 8.223 | 5.891 | 5.92 |
| Yield Gain Mean (Modeled) | 1.425 | 2.131 | 1.161 | 1.103 | 0 | 0.585 | 1.092 | 0.433 | 1.329 |
| Yield Gain Standard Error (Modeled) | 5.948 | 5.926 | 6.469 | 6.815 | 5.484 | 6.48 | 6.48 | 5.029 | 5.037 |

**Table 8,** below, shows how NRRL- B-67746 performed compared to other strains of the same operational group when applied on top of a chemical and reference biological base. The same type of data is presented as in **Table 7,** except that raw yield gains are not provided.

**Table 8**

|  | Biological Chemical Base | B-67746 | Strain 2 | Strain 1 |
|---|---|---|---|---|
| Number of Trials | 70 | 32 | 16 | 16 |
| Consistency 0 (%) | 0 | 46.9 | 43.8 | 56.2 |
| Consistency 0.5 (%) | 0 | 28.1 | 18.8 | 25 |
| Consistency 2.5 (%) | 0 | 3.1 | 6.2 | 0 |
| Predicted Consistency 0 (%) | N/A | 56.7 | 48.4 | 57.2 |
| Lower 95% Confidence Interval for Predicted Consistency 0 (%) | N/A | 42.9 | 29.8 | 37.9 |
| Upper 95% Confidence Interval for Predicted Consistency 0 (%) | N/A | 69.7 | 67.3 | 74.9 |
| Yield Gain Mean (Modeled) | 0 | 0.379 | -0.158 | 0.318 |
| Yield Gain Standard Error (Modeled) | 6.151 | 6.247 | 5.877 | 5.886 |

**Example 7: Yield Benefit in Corn Field Trials**

Corn field trials were conducted over the course of five years (including the three years assessed in **Example 6** to assess the effect of the NRRL B-67746 strain on corn yield performance. In Years 1 and 2, NRRL B-67746 was cultured at 30°C for 5 days until sporulation was complete using shake flasks and a soy-based medium. In Years 3 and 4, NRRL B-67746 was cultured under the same conditions for 2 days using a bioreactor. In Year 5, NRRL B-67746 was cultured under the same conditions for 2 days using a bioreactor and a yeast extract-based medium.

The resulting whole broths were applied to hybrid corn seeds along with a base fungicide and insecticide treatment at a rate of 1-2 $\times$ 10$^6$ CFU/seed for Years 1 and 2; 2 $\times$ 10$^6$ CFU/seed for Years 3-5. An additional rate of 1 x 10$^7$ CFU/seed was also used in Year 5. In Years 3-5, a preservative was added to the whole broth prior to its application to the corn seeds. Hybrid corn seeds treated with only the base fungicides and insecticides were included in the trials as controls. Treated hybrid corn seeds were planted and grown in 4-row plots of 30-40 feet in length each year across a variety of corn growing geographic locations following standard agricultural practices until harvest. The trials utilized a randomized complete block design. Each trial consisted of different treatments. Typically, there were four replicates for each treatment including control per location. One germplasm was tested in each trial each year, although the germplasm might change from year to year. The relative maturity of the germplasm tested was matched to the geographical location.

At harvest, corn plants in the middle two rows in each 4-row plot were harvested for yield measurements to avoid border effect. Yield measurements from individual plots were combined. Data from outlier plots was removed from trial data, such as plots with extremely low yield or extreme outliers based on the yield range per trial. **Table 9** represents across year and location analysis results on changes in yield (delta) for corn plants grown from hybrid corn seeds treated with the NRRL B-67746 strain relative to control plants treated with only the base pesticides. Results were based in part on modeling of the raw data. Model estimates accounted for spatial variation and stochasticity within and between fields, and were produced by mixed linear models with restricted maximum likelihood. This is a standard method used in many studies and produces more accurate results than solely summarizing raw data.

**Table 9 - Yield Increase in Corn Plants Grown from Seeds Treated with NRRL B-67746 Relative to Plants Grown from Control Seeds**

| Locations | Yield Delta* (Bushel/acre) | Win Rate** (%) | p-Value | Number of Trials |
|---|---|---|---|---|
| All | 2.0 | 61 | 0.09 | 147 |
| *: Yield delta: representing yield change in bushels per acre relative to control treated with the base pesticides. **: Win rate: % of fields where the treatment yield was higher than control yield. | | | | |

As shown in **Table 9,** NRRL B-67746 resulted in a yield gain of 2 bushels/acre across a total of 147 trials over a course of five years with a win rate of 61% compared to the control treated only with the base pesticides.

**Example 8: NRRL B-67746 Improved Nutrient Uptake in Corn Plants Grown in Controlled Environments**

To assess the effect of NRRL B-67746 on nutrient uptake, hybrid corn seeds treated with NRRL B-67746 whole broth at a rate of 2 $\times$ 10$^6$ CFU per seed or water (as a control) on top of a base fungicide and insecticide treatment were planted in a sandy soil in 5-inch tall pots and grown in greenhouse or growth chamber in two separate studies. The plants were grown in the greenhouse with a photoperiod of 16-hour day and 8-hour night, a day time temperature of 29-33°C and a night time temperature of 20°C, and relative humidity of 52-59%; or in the growth chamber with a photoperiod of 16-hour day and 8-hour night, a day temperature of 28°C and a night temperature of 18°C, and a relative humidity of 55%. The plants were watered through sub-irrigation at least once daily and fertilized with a 20-20-20 fertilizer twice: at early V3 stage and late V3 stage. The experiments utilized a randomized complete block design and contained 16 plants per treatment.

The second fully expanded leaf from the top of each plant was harvested at V3 stage from growth chamber grown plants, and V4 stage from greenhouse grown plants. Pooled samples were processed, divided into 4 replicates, and subjected to nutrient analysis using standard methods known in the art (For nitrogen assay: http://www.elementar.de/en/products/nprotein-analysis/rapid-n-exceed.html; for other nutrients, Havlin, J.L., and P.N. Soltanpour. 1980. A nitric acid plant tissue digest method for use with inductively coupled plasma spectrometry. Comm. Soil Sci. Plant Anal. 11(10):969-980. Modification with hydrogen peroxide addition during digestion, determination using inductively coupled plasma optical emission spectrometry (ICP-OES)). In general, corn plants grown from seeds treated with NRRL B-67746 exhibited increased uptake of all nutrients relative to the control plants grown from seeds treated with water and the base pesticides as shown in **Table 10.** Significant increases in total nitrogen, calcium and manganese content were consistently observed in both studies, while significant increases in uptake of sulfur, magnesium, zinc, iron, copper and boron were also observed in one of the studies.

**Table 10 - Improved Nutrient Uptake in Corn Plants Grown from Seeds Treated with NRRL B-67746 Relative to Plants Grown from Control Seeds**

| Controlled Environment | % Increase over Control | | | | | | | | | | |
|---|---|---|---|---|---|---|---|---|---|---|---|
| | Total Nitrogen | Phosphorous | Potassium | Sulfur | Calcium | Magnesium | Zinc | Iron | Manganese | Copper | Boron |
| Greenhouse | 12* | 6 | 3 | 3 | 21** | 13 | 9 | 7 | 28* | 0 | 8 |
| Growth Chamber | 16** | 13 | 14 | 35* | 17* | 26* | 28** | 33* | 22* | 32* | 43* |
| *: p-value ≤ 0.1<br>**: p-value ≤ 0.2 | | | | | | | | | | | |

**Example 9: NRRL B-67746 Improved Nutrient Uptake in Soybean Plants Grown in Controlled Environments**

To assess the effect of NRRL B-67746 on nutrient uptake, soybean seeds treated with NRRL B-67746 whole broth at a rate of $2 \times 10^6$ CFU per seed or water (as a control) on top of a base fungicide and insecticide treatment were planted in sandy loam soil in 5-inch tall pots and grown in greenhouse or growth chamber in two separate studies. The plants were grown in the greenhouse with a photoperiod of 16-hour day and 8-hour night, a day time temperature of 29-33°C and a night time temperature of 20°C, and a relative humidity of 52-59%; or in the growth chamber with a photoperiod of 16-hour day and 8-hour night, a day temperature of 28°C and a night temperature of 18°C, and a relative humidity of 55%. The plants were watered through sub-irrigation at least once daily and fertilized with a 20-20-20 fertilizer twice: at early V3 stage and late V3 stage. The experiments utilized a randomized complete block design and contained 16 plants per treatment.

The second fully expanded leaf from the top of each plant was harvested at V3 stage from growth chamber grown plants, and V4 stage from greenhouse grown plants. Pooled samples were processed, divided into 4 replicates, and subjected to nutrient analysis using standard methods known in the art (For nitrogen assay: http://www.elementar.de/en/products/nprotein-analysis/rapid-n-exceed.html; for other nutrients, Havlin, J.L., and P.N. Soltanpour. 1980. A nitric acid plant tissue digest method for use with inductively coupled plasma spectrometry. Comm. Soil Sci. Plant Anal. 11(10):969-980. Modification with hydrogen peroxide addition during digestion, determination using inductively coupled plasma optical emission spectrometry (ICP-OES)). In general, soybean plants grown from seeds treated with NRRL B-67746 exhibited increased uptake of all nutrients relative to the control plants grown from seeds treated with water and the base pesticides as shown in **Table 11.** Significant increases in total nitrogen, potassium, calcium, manganese, sulfur, magnesium, zinc and iron contents were observed in one of the studies.

**Table 11 - Improved Nutrient Uptake in Soybean Plants Grown from Seeds Treated with NRRL B-67746 Relative to Plants Grown from Control Seeds**

| Controlled Environment | % Increase over Control | | | | | | | | | | |
|---|---|---|---|---|---|---|---|---|---|---|---|
| | Total Nitrogen | Phosphorous | Potassium | Sulfur | Calcium | Magnesium | Zinc | Iron | Manganese | Copper | Boron |
| Greenhouse | 22** | 13 | 25** | 19** | 20** | 21** | 11** | 24** | 12** | 30 | 13 |
| Growth Chamber | 9 | 2 | 5 | 4 | 2 | 2 | 12 | 18 | 6 | 5 | 2 |
| **: p-value $\leq$ 0.2 | | | | | | | | | | | |

**Example 10: NRRL B-67746 Improved Root Growth in Corn and Soybean Plants Grown in Controlled Environments**

Corn and soybean seeds treated with NRRL B-67746 whole broth at a rate of $2 \times 10^6$ CFU per seed or water (as a control) on top of a base fungicide and insecticide treatment were planted and grown in greenhouse or growth chamber as described in **Examples 9** and **10.** The experiments utilized a randomized complete block design and contained 16 plants per treatment.

Whole plants were harvested at V3 stage from growth chamber or at V4 stage from greenhouse and washed thoroughly with water to remove any residual soil from the roots. Roots from each plant were collected and weighted. The results are summarized in **Table 12.** Root biomass is expressed as gram of fresh root weight. The control represents plants grown from seeds treated with water on top of a base fungicide and insecticide treatment. B-67746 represents plants grown from seeds treated with the B-67734 strain on top of the base fungicide and insecticide treatment. B-67746 treatment significantly improved corn plant root biomass in both greenhouse and growth chamber grown plants **(Table 12).** Similar improvement was also observed for soybean plants, even though the improvement for growth chamber grown plants was numerical.

**Table 12 - NRRL B-67746 Improved Root Biomass in Corn And Soybean Plants**

| Crop | Controlled Environment | Treatment | Fresh Root Biomass Mean (g/Plant) | Standard Error | p-Value (Comparison to Control) |
|---|---|---|---|---|---|
| Corn | GH | Control | 10.89 | 0.39 | |
| | | B-67746 | 12.36 | 0.76 | 0.1 |
| | Growth Chamber | Control | 1.86 | 0.1 | |
| | | B-67746 | 2.43 | 0.13 | $2.00 \times 10^{-3}$ |
| Soybean | GH | Control | 4.32 | 0.17 | |
| | | B-67746 | 5.1 | 0.19 | $5.00 \times 10^{-3}$ |
| | Growth Chamber | Control | 0.13 | 0.01 | |
| | | B-67746 | 0.15 | 0.01 | 0.26 |

**Example 11: B-67746 Increased Solubilization of Inorganic Phosphate**

NRRL B-67746 was cultured in liquid LB medium at 30°C and 400 rpm for 24 hours. Following the incubation, aliquots of 50 $\mu$L of the B-67746 culture were added to each well of a 96 deep well block filled with 950 $\mu$L of sterile NBRIY medium (glucose 10 g/L, $MgSO_4 \cdot 7\ H_2O$ 0.1 g/L, KCl 0.2 g/L, $MnSO_4 \cdot H_2O$ 0.002 g/L, NaCl 0.2 g/L, $(NH_4)_2SO_4$ 0.5 g/L, bromophenol 0.025 g/L) containing 5 g/L tricalcium phosphate or 5 g/L ferric phosphate. The filled 96 well blocks were incubated on a shaker at 30°C and 400 rpm with 85% humidity for 72 hours. At the end of the incubation, the blocks were sealed with a plate film and centrifuged at 4700 rpm for 10 minutes. An aliquot of 200 $\mu$L of the supernatant from each well of the block was transferred to a well of a Nunc 96 well micro plate. The absorbance of the mixture at OD600 was measured through a plate reader. The experiment was repeated twice, each with 16 replicates per sample. Uninoculated culture media was used as a control.

As shown in **Table 13,** B-67746 was able to solubilize two different inorganic phosphate sources compared to the control without B-67746, as indicated by a reduction in OD600 absorbance.

**Table 13 - NRRL B-67746 Increased Solubilization of Inorganic Phosphate**

| Treatment | Phosphate Type | Average Absorbance at OD600 | Standard Deviation |
|---|---|---|---|
| Control | Ferric phosphate | 1.3464 | 0.2174 |
| | tricalcium phosphate | 1.5017 | 0.2089 |
| B-67746 | Ferric phosphate | 0.5688 | 0.1108 |
| | tricalcium phosphate | 1.2483 | 0.0417 |

**Claims**

1.  A composition comprising a biologically pure culture of *Bacillus* spp. strain NRRL B-67746 or a mutant thereof wherein the mutant has a 16S rDNA sequence having at least about 98% sequence identity to the 16S rDNA sequence of *Bacillus* spp. NRRL B-67746 and improved ability to enhance plant growth compared to *Bacillus* spp. strain NRRL B-67746, wherein said improved ability to enhance plant growth means an improved ability to increase plant, crop, fruit or vegetable yield or plant mass.

2.  The composition of Claim 1 further comprising an agriculturally acceptable carrier.

3.  A composition comprising a fermentation product of *Bacillus* spp. strain NRRL B-67746 or a mutant of the strain having all the identifying characteristics of the strain, wherein said fermentation product comprises at least $1 \times 10^5$ CFU per ml of *Bacillus* spp. NRRL B-67746.

4.  The composition of Claim 1 or Claim 3, further comprising a formulation ingredient, preferably a thickener.

5.  The composition of Claim 1 or claim 3, wherein the fermentation product is a liquid concentrate.

6.  The composition of Claim 5, wherein the liquid concentrate is a flowable suspension, or the composition comprising at least about $5 \times 10^{10}$ CFU strain/mL of the liquid concentrate.

7.  The composition of Claim 1 or Claim 3 further comprising a *Bradyrhizobium* inoculant, a fungicide, an insecticide, a nematicide, or a biological active compound.

8.  The composition of Claim 7, wherein said biological active compound is one or more lipo-chitooligosaccharide.

9.  A method of treating a plant to enhance plant growth, wherein the method comprises applying a composition comprising *Bacillus* spp. strain NRRL B-67746 or a mutant derived from the strain wherein the mutant has a 16S rDNA sequence having at least about 98% sequence identity to the 16S rDNA sequence of *Bacillus* spp. NRRL B-67746 and improved ability to enhance plant growth compared to *Bacillus* spp. strain NRRL B-67746, wherein said improved ability to enhance plant growth means an improved ability to increase plant, crop, fruit or vegetable yield or plant mass to the plant, to a part of the plant and/or to a locus of the plant.

10. The method of Claim 9, wherein the composition is a fermentation product of the *Bacillus* spp. strain NRRL B-67746 or a mutant of the strain having all the identifying characteristics of the strain, wherein said fermentation product comprises at least $1 \times 10^5$ CFU per ml of Bacillus spp. NRRL B-67746.

11. The method of Claim 9 or Claim 10, wherein the method comprises applying the composition to seed, preferably wherein the composition is applied at a rate of about $1 \times 10^5$ to about $1 \times 10^8$ colony forming units (CFU) of the strain NRRL B-67746 or the mutant per seed.

12. The method of Claim 9, wherein the composition is applied to soil at a rate of about $1 \times 10^{13}$ to about $1 \times 10^{15}$ colony forming units (CFU) per hectare of the strain NRRL B-67746 or the mutant.

13. The method according to any one of Claims 9 to 12, wherein the enhanced plant growth is increased total plant biomass or yield of the plant by at least 1%, or wherein the enhanced plant growth is increased plant nutrient uptake, preferably wherein the increased plant nutrient uptake is increased nitrogen uptake.

14. The method of any one of the above claims, wherein the plant is selected from the group consisting of cotton, corn, sorghum, soybean and sugarbeet.

15. Seed coated with a composition according to Claim 1.

**Patentansprüche**

1.  Zusammensetzung, umfassend eine biologisch reine Kultur des *Bacillus* spp. Stammes NRRL B-67746 oder einer Mutante davon, wobei die Mutante eine 16S rDNA-Sequenz mit mindestens etwa 98% Sequenzidentität mit der 16S rDNA-Sequenz von *Bacillus* spp. NRRL B-67746 und eine verbesserte Fähigkeit zur Verbesserung des Pflanzenwachstums im Vergleich zum *Bacillus* spp. Stamm NRRL B-67746 aufweist, wobei die verbesserte Fähigkeit zur Verbesserung des Pflanzenwachstums eine verbesserte Fähigkeit zur Erhöhung des Pflanzen-, Ernte-, Frucht- oder Gemüseertrags oder der Pflanzenmasse bedeutet.

2. Die Zusammensetzung nach Anspruch 1, weiterhin umfassend einen landwirtschaftlich akzeptablen Träger.

3. Zusammensetzung, umfassend ein Fermentationsprodukt des *Bacillus* spp. Stammes NRRL B-67746 oder einer Mutante des Stammes mit allen identifizierenden Merkmalen des Stammes, wobei das Fermentationsprodukt mindestens 1 x $10^5$ KBE pro ml *Bacillus* spp. NRRL B-67746 umfasst.

4. Die Zusammensetzung nach Anspruch 1 oder Anspruch 3, weiterhin umfassend einen Formulierungsbestandteil, vorzugsweise ein Verdickungsmittel.

5. Die Zusammensetzung nach Anspruch 1 oder Anspruch 3, wobei das Fermentationsprodukt ein flüssiges Konzentrat ist.

6. Die Zusammensetzung nach Anspruch 5, wobei das flüssige Konzentrat eine fließfähige Suspension ist oder wobei die Zusammensetzung mindestens etwa $5 \times 10^{10}$ KBE Stamm/ml des flüssigen Konzentrats umfasst.

7. Die Zusammensetzung nach Anspruch 1 oder Anspruch 3, weiterhin umfassend ein *Bradyrhizobium*-Impfmittel, ein Fungizid, ein Insektizid, ein Nematizid oder eine biologisch aktive Verbindung.

8. Die Zusammensetzung nach Anspruch 7, wobei die biologisch aktive Verbindung ein oder mehrere Lipo-Chitooligosaccharide ist.

9. Verfahren zum Behandeln einer Pflanze zur Verbesserung des Pflanzenwachstums, wobei das Verfahren das Anwenden einer Zusammensetzung umfassend *Bacillus* spp. Stamm NRRL B-67746 oder eine von dem Stamm abgeleitete Mutante, wobei die Mutante eine 16S rDNA-Sequenz mit mindestens etwa 98% Sequenzidentität mit der 16S rDNA-Sequenz von *Bacillus* spp. NRRL B-67746 und eine verbesserte Fähigkeit zur Verbesserung des Pflanzenwachstums im Vergleich zum *Bacillus* spp. Stamm NRRL B-67746 aufweist, wobei die verbesserte Fähigkeit zur Verbesserung des Pflanzenwachstums eine verbesserte Fähigkeit zur Erhöhung des Pflanzen-, Ernte-, Frucht- oder Gemüseertrags oder der Pflanzenmasse aufweist, auf die Pflanze, auf einen Teil der Pflanze und/oder auf einen Standort der Pflanze umfasst.

10. Das Verfahren nach Anspruch 9, wobei die Zusammensetzung ein Fermentationsprodukt des *Bacillus* spp. Stammes NRRL B-67746 oder einer Mutante des Stammes mit allen identifizierenden Merkmalen des Stammes ist, wobei das Fermentationsprodukt mindestens 1 x $10^5$ KBE pro ml *Bacillus* spp. NRRL B-67746 umfasst.

11. Das Verfahren nach Anspruch 9 oder Anspruch 10, wobei das Verfahren das Anwenden der Zusammensetzung auf Saatgut umfasst, vorzugsweise wobei die Zusammensetzung mit einer Menge von etwa $1 \times 10^5$ bis etwa $1 \times 10^8$ koloniebildenden Einheiten (KBE) des Stammes NRRL B-67746 oder der Mutante pro Samen angewendet wird.

12. Das Verfahren nach Anspruch 9, wobei die Zusammensetzung bei einer Menge von etwa 1 x $10^{13}$ bis etwa 1 x $10^{15}$ koloniebildenden Einheiten (KBE) pro Hektar des Stammes NRRL B-67746 oder der Mutante auf den Boden angewendet wird.

13. Das Verfahren nach einem der Ansprüche 9 bis 12, wobei das verbesserte Pflanzenwachstum eine Erhöhung der gesamten Pflanzenbiomasse oder des Pflanzenertrags um mindestens 1% ist oder wobei das verbesserte Pflanzenwachstum eine erhöhte Aufnahme von Pflanzennährstoffen ist, vorzugsweise wobei die erhöhte Aufnahme von Pflanzennährstoffen eine erhöhte Stickstoffaufnahme ist.

14. Das Verfahren nach einem der vorhergehenden Ansprüche, wobei die Pflanze aus der Gruppe umfassend Baumwolle, Mais, Sorghum, Sojabohne und Zuckerrübe ausgewählt ist.

15. Samen, beschichtet mit einer Zusammensetzung nach Anspruch 1.

**EP 3 986 138 B1**

**Revendications**

1. Composition comprenant une culture biologiquement pure de la souche NRRL B-67746 de *Bacillus* spp. ou d'un mutant de celle-ci, le mutant possédant une séquence d'ADNr 16S présentant au moins environ 98 % d'identité de séquence avec la séquence d'ADNr 16S de *Bacillus* spp. NRRL B-67746 et une capacité améliorée à augmenter la croissance des plantes par rapport à la souche NRRL B-67746 de *Bacillus* spp., ladite capacité améliorée à augmenter la croissance des plantes signifiant une capacité améliorée à augmenter le rendement de plantes, de cultures, de fruits ou de légumes, ou la masse des plantes.

2. La composition selon la revendication 1 comprenant en outre un support acceptable pour l'agriculture.

3. Composition comprenant un produit de fermentation de la souche NRRL B-67746 de *Bacillus* spp. ou d'un mutant de cette souche présentant toutes les caractéristiques d'identification de la souche, ledit produit de fermentation comprenant au moins 1 x $10^5$ UFC par ml de *Bacillus* spp. NRRL B-67746.

4. La composition selon la revendication 1 ou la revendication 3, comprenant en outre un ingrédient de formulation, de préférence un épaississant.

5. La composition selon la revendication 1 ou la revendication 3, dans laquelle le produit de fermentation est un concentré liquide.

6. La composition selon la revendication 5, dans laquelle le concentré liquide est une suspension fluide, ou la composition comprenant au moins environ $5 \times 10^{10}$ UFC de la souche/mL du concentré liquide.

7. La composition selon la revendication 1 ou la revendication 3 comprenant en outre un inoculant de *Bradyrhizobium,* un fongicide, un insecticide, un nématicide ou un composé biologiquement actif.

8. La composition selon la revendication 7, dans laquelle ledit composé biologiquement actif est un ou plusieurs lipo-chitooligosaccharides.

9. Procédé de traitement d'une plante visant à augmenter la croissance de la plante, le procédé comprenant l'application d'une composition comprenant la souche NRRL B-67746 de *Bacillus* spp. ou un mutant dérivé de cette souche, le mutant présentant une séquence d'ADNr 16S ayant au moins environ 98 % d'identité de séquence avec la séquence d'ADNr 16S de *Bacillus* spp. NRRL B-67746 et une capacité améliorée à augmenter la croissance des plantes par rapport à la souche NRRL B-67746 de *Bacillus* spp., ladite capacité améliorée à augmenter la croissance des plantes signifiant une capacité améliorée à augmenter le rendement de plantes, de cultures, de fruits ou de légumes, ou la masse des plantes, à la plante, à une partie de la plante et/ou au locus de la plante.

10. Le procédé selon la revendication 9, dans lequel la composition est un produit de fermentation de la souche NRRL B-67746 de *Bacillus* spp. ou d'un mutant de la souche présentant toutes les caractéristiques d'identification de la souche, ledit produit de fermentation comprenant au moins 1 x $10^5$ UFC par ml de *Bacillus* spp. NRRL B-67746.

11. Le procédé selon la revendication 9 ou la revendication 10, comprenant l'application de la composition à des semences, de préférence ladite composition étant appliquée à un taux d'environ $1 \times 10^5$ à environ $1 \times 10^8$ unités formatrices de colonies (UFC) de la souche NRRL B-67746 ou du mutant par semence.

12. Le procédé selon la revendication 9, comprenant l'application de la composition au sol à un taux d'environ $1 \times 10^{13}$ à environ $1 \times 10^{15}$ unités formatrices de colonies (UFC) par hectare de la souche NRRL B-67746 ou du mutant.

13. Le procédé selon l'une quelconque des revendications 9 à 12, dans lequel l'augmentation de la croissance des plantes consiste en une augmentation d'au moins 1 % de la biomasse totale de la plante ou du rendement de la plante, ou dans lequel l'augmentation de la croissance des plantes consiste en une augmentation de l'absorption des nutriments par la plante, de préférence dans lequel l'augmentation de l'absorption des nutriments par la plante consiste en une augmentation de l'absorption de l'azote.

14. Le procédé selon l'une quelconque des revendications précédentes, dans lequel la plante est sélectionnée parmi le groupe constitué de coton, maïs, sorgho, soja et betterave à sucre.

**15.** Graine enrobée d'une composition selon la revendication 1.

**FIG. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010179060 A
- WO 2006043635 A
- WO 2003106457 A
- WO 2006003494 A
- WO 2010052161 A
- EP 2647626 A
- WO 2004099160 A
- JP 2010018586 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- WO 2015058021 A1
- WO 2015058028 A1
- CN 103265527 A
- WO 2013115391 A1
- WO 2014187846 A1

- WO 2011151146 A1
- WO 2011067272 A
- WO 2013050302 A
- US 6060051 A
- US 7094592 B
- WO 2016154297 A
- WO 2013034938 A
- WO 2011151819 A
- WO 2010086790 A
- US 6245551 B
- US 5061495 A
- WO 2003000051 A
- WO 2014028521 A
- WO 2016020371 A
- WO 2017019448 A
- WO 2009116106 A
- US 8431120 B
- JP 11253151 A
- US 20100291039
- US 7579183 B
- WO 2015067800 A
- US 330576
- WO 2017205258 A
- WO 2018129016 A
- WO 2018128986 A
- IT 2008000196 W
- WO 2005063784 A
- WO 2007117500 A
- WO 2008071674 A
- US 5549718 A

**Non-patent literature cited in the description**

- **RYU et al.** *Proc. Natl. Acad. Sci. U.S.A.*, 2003, vol. 100, 4927-4932
- **SHAHAB, S et al.** Indole Acetic Acid Production and Enhanced Plant Growth Promotion by Indigenous PSBs. *African Journal of Agricultural Research*, November 2009, vol. 4 (11), 1312-1316
- **MARQUES, A et al.** Assessment of the Plant Growth Promotion Abilities of Six Bacterial Isolates Using Zea mays as Indicator Plant. *Soil Biology and Biochemistry*, 2010, vol. 42, 1229-1235

- **FAN, B et al.** Bacillus amyloliquefaciens, Bacillus velezensis, and Bacillus siamensis Form an "Operational Group B. amyloliquefaciens" within the B. subtilis Species Complex. *Front Microbiol*, 2017, vol. 8, 22
- **SCHAEFFER et al.** *PNAS USA*, 1976, vol. 73 (6), 2151-2155
- **TAYLOR, A.G. et al.** Concepts and Technologies of Selected Seed Treatments. *Annu. Rev. Phytopathol.*, 1990, vol. 28, 321-339
- The Pesticide Manual. British Crop Protection Council, 2012
- *CHEMICAL ABSTRACTS*, 1460292-16-3
- *CHEMICAL ABSTRACTS*, 1472050-04-6

- *CHEMICAL ABSTRACTS*, 885026-50-6
- *CHEMICAL ABSTRACTS*, 637360-23-7
- *CHEMICAL ABSTRACTS*, 872999-66-1
- *CHEMICAL ABSTRACTS*, 1225292-17-0
- *CHEMICAL ABSTRACTS*, 1440516-42-6
- *CHEMICAL ABSTRACTS*, 792914-58-0
- *CHEMICAL ABSTRACTS*, 1204776-60-2
- *CHEMICAL ABSTRACTS*, 1461743-15-6
- *CHEMICAL ABSTRACTS*, 1226889-14-0
- *CHEMICAL ABSTRACTS*, 1449220-44-3
- *CHEMICAL ABSTRACTS*, 1332628-83-7
- *CHEMICAL ABSTRACTS*, 1477923-37-7
- *CHEMICAL ABSTRACTS*, 1105672-77-2
- *CHEMICAL ABSTRACTS*, 1232543-85-9
- *CHEMICAL ABSTRACTS*, 1268277-22-0
- *CHEMICAL ABSTRACTS*, 1233882-22-8
- *CHEMICAL ABSTRACTS*, 1108184-52-6
- *CHEMICAL ABSTRACTS*, 1542271-46-4
- *CHEMICAL ABSTRACTS*, 1370358-69-2
- *CHEMICAL ABSTRACTS*, 1181213-14-8
- *CHEMICAL ABSTRACTS*, 1253850-56-4
- *CHEMICAL ABSTRACTS*, 933798-27-7
- *CHEMICAL ABSTRACTS*, 934001-66-8
- *CHEMICAL ABSTRACTS*, 1477919-27-9
- *CHEMICAL ABSTRACTS*, 1452877-50-7
- *CHEMICAL ABSTRACTS*, 1449021-97-9
- *CHEMICAL ABSTRACTS*, 1638765-58-8
- *CHEMICAL ABSTRACTS*, 1229023-00-0
- *CHEMICAL ABSTRACTS*, 1309959-62-3
- *Crop Protection*, 2006, vol. 25, 468-475
- **PIETR et al.** *Zesz. Nauk. A R w Szczecinie*, 1993, vol. 161, 125-137
- *Can Jour Plant Sci*, vol. 83 (3), 519-524
- **JENSEN, D.F. et al.** Development of a Biocontrol Active Compound for Plant Disease Control with Special Emphasis on the Near Commercial Fungal Antagonist Clonostachys rosea Strain 'IK726. *Australas Plant Pathol*, 2007, vol. 36, 95-101
- **DENARIE et al.** *Ann. Rev. Biochem.*, 1996, vol. 65, 503
- **DIAZ et al.** *Mol. Plant-Microbe Interactions*, 2000, vol. 13, 268
- **HUNGRIA et al.** *Soil Biol. Biochem.*, 1997, vol. 29, 819
- **HAMEL et al.** *Planta*, 2010, vol. 232, 787
- **PROME et al.** *Pure & Appl. Chem.*, 1998, vol. 70 (1), 55
- *Crit. Rev. Plant Sci.*, 2000, vol. 54, 257
- **SAMAIN et al.** *Carbohydrate Res*, 1997, vol. 302, 35
- **COTTAZ et al.** *Meth. Eng.*, 2005, vol. 7 (4), 311
- **SAMAIN et al.** *J. Biotechnol.*, 1999, vol. 72, 33
- *CHEMICAL ABSTRACTS*, 129531-12-0
- *CHEMICAL ABSTRACTS*, 71526-07-3
- *CHEMICAL ABSTRACTS*, 52836-31-4
- **COLBY, S.R.** Calculating Synergistic and Antagonistic Responses of Herbicide Combinations. *Weeds*, 1967, vol. 15, 20-22
- Isoboles, A Graphic Representation of Synergism in Pesticides. *Neth. J. Plant Path.*, 1964, vol. 70, 73-80
- **HAVLIN, J.L.** ; **P.N. SOLTANPOUR**. A nitric acid plant tissue digest method for use with inductively coupled plasma spectrometry. *Comm. Soil Sci. Plant Anal.*, 1980, vol. 11 (10), 969-980